(19) Europäisches Patentamt
European Patent Office
Office européen des brevets

(11) **EP 4 306 995 A1**

(12) **EUROPEAN PATENT APPLICATION**
published in accordance with Art. 153(4) EPC

(43) Date of publication:
**17.01.2024 Bulletin 2024/03**

(51) International Patent Classification (IPC):
**G01S 7/481** (2006.01) **G01S 17/02** (2020.01)

(21) Application number: **22783881.0**

(22) Date of filing: **24.03.2022**

(86) International application number:
**PCT/CN2022/082832**

(87) International publication number:
**WO 2022/213814 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.04.2021 CN 202110382166**
**13.08.2021 CN 202110930106**

(71) Applicant: **Huawei Technologies Co., Ltd.**
**Longgang**
**Shenzhen, Guangdong 518129 (CN)**

(72) Inventors:
• **WANG, Yuemeng**
**Shenzhen, Guangdong 518129 (CN)**
• **WANG, Wei**
**Shenzhen, Guangdong 518129 (CN)**
• **YU, Anliang**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **DETECTION DEVICE AND CONTROL METHOD THEREFOR**

(57) A detection device includes a transmitting component (21), configured to transmit a laser beam; a collimating and shaping component (22), configured to process the laser beam as a collimated linear laser beam; a scanning rotating mirror component (23), including at least one reflection surface, configured to reflect the linear laser beam; a receiving component (25), configured to receive a target echo, and convert the target echo from an optical signal into an electrical signal corresponding to the target echo, where the target echo includes a reflected signal of the linear laser beam; and a synchronization component (24), at least configured to obtain a synchronization position of a working reflection surface in the at least one reflection surface, where the synchronization position represents a position at which the working reflection surface initially receives the linear laser beam, and the working reflection surface corresponds to an emergent direction of the linear laser beam. According to the detection device in this application, resolution of the detection device can be improved without increasing costs and a volume of the detection device. In addition, a control method of a detection device, a chip, a computer-readable storage medium, a laser radar system and a terminal are provided.

FIG. 2

## Description

This application claims priority to Chinese Patent Application No. 202110382166.4, filed with the China National Intellectual Property Administration on April 9, 2021 and entitled "DETECTION DEVICE AND CONTROL METHOD THEREOF", and Application No. 202110930106.1, filed with the China National Intellectual Property Administration on August 13, 2021 and entitled "DETECTION DEVICE AND CONTROL METHOD THEREOF", which are incorporated herein by reference in their entireties.

## TECHNICAL FIELD

This application relates to the field of laser radar technologies, and in particular, to a detection device and a control method thereof.

## BACKGROUND

A laser radar (Lidar) technology is an optical measurement technique in which parameters such as a distance of a target are measured by irradiating a beam of light, usually a beam of pulsed laser, to the target. For example, a laser radar measures a distance between a target and a light source by measuring a time difference between transmitted light and received light (also referred to as a time of flight (Time of Flight) of light).

Data output by the laser radar is called a point cloud, which is applied in fields such as 3D modeling, automatic driving, geomatics, archaeology, geography, geomorphology, earthquake, forestry, remote sensing, and atmospheric physics. In addition, this technology is also used in airborne laser map surveying and mapping, laser altimetry, laser radar contour mapping and other specific applications.

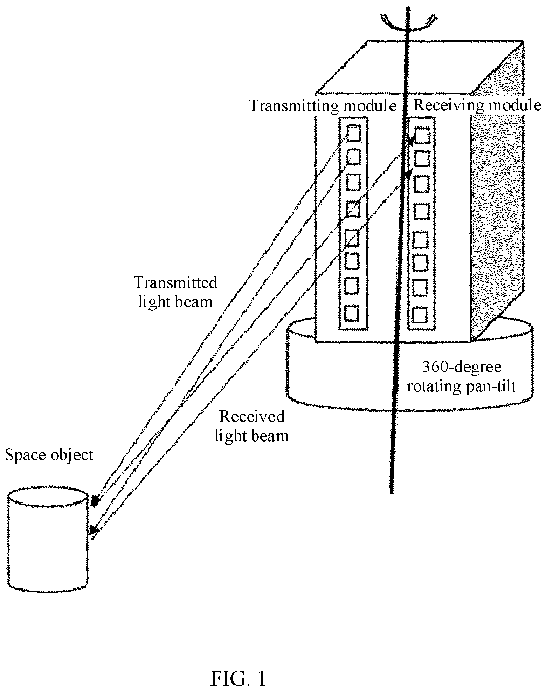

FIG. 1 is a schematic diagram of a structure of a laser radar system in a conventional technology. As shown in FIG. 1, the existing laser radar system includes a transmitting module, a receiving module, a rotating pan-tilt, and an internal control and algorithm module (not shown in FIG. 1). The transmitting module consists of a plurality of laser transmitters, and the receiving module consists of a plurality of avalanche photodiode (avalanche photodiode, APD) detectors. The laser transmitters of the transmitting module are in a one-to-one correspondence with the detectors of the receiving module. A transmitted light beam is irradiated to a space object, and is received by the detectors of the receiving module after being reflected, so that a point cloud image of the space object is formed. Because the laser radar uses a scanning manner in which light is emitted in form of dots and received in form of dots, the detectors and the laser transmitters need to be disposed in a one-to-one correspondence. To implement high-precision vertical resolution, quantities of the laser transmitters and the detectors of the receiving module and the transmitting module need to be increased. However, if the quantities of the laser transmitters and the detectors are increased, costs and a volume of the laser radar will be inevitably increased.

## SUMMARY

Embodiments of this application provide a detection device and a control method thereof, and a scanning manner in which light is emitted in form of lines and received in form of lines is used, so that resolution of the detection device is improved without increasing costs and a volume of the detection device.

According to a first aspect, an embodiment of this application provides a detection device, including: a transmitting component, configured to transmit a laser beam; a collimating and shaping component, configured to process the laser beam as a collimated linear laser beam or planar laser beam; a scanning rotating mirror component, including at least one reflection surface, configured to reflect the linear laser beam or the planar laser beam; a receiving component, configured to receive a target echo, where the target echo includes a reflected signal of the linear laser beam or the planar laser beam; and a synchronization component, at least configured to obtain a synchronization position of a working reflection surface in the at least one reflection surface. The synchronization position represents a position at which the working reflection surface initially receives the linear laser beam or the planar laser beam, and the working reflection surface corresponds to an emergent direction of the linear laser beam or the planar laser beam. Further, optionally, the detection device may further include a control component, at least configured to control the scanning rotating mirror component and the transmitting component based on the synchronization position obtained by the synchronization component.

In this embodiment of this application, a scanning manner in which light is emitted in form of lines and received in form of lines is used, so that resolution of the detection device is significantly improved without increasing costs and a volume of the detection device.

In a possible implementation, the transmitting component includes a laser transmitter array consisting of a plurality of laser transmitters.

In another possible implementation, the laser transmitter array includes at least one column of laser transmitters. A first column of the at least one column of laser transmitters includes at least N groups of laser transmitters. The N groups of laser transmitters are arranged in a staggered manner, or the N groups of laser transmitters are arranged in a collinear manner, or the N groups of laser transmitters are arranged in a non-collinear manner, where N is a positive integer greater than one. By using proper arrangement of the plurality of laser transmitters, spatial isolation of the plurality of laser transmitters in the transmitting component is implemented to reduce laser crosstalk. It should be noted that the first column of laser transmitters herein is any one of the at least one column of laser transmitters, and "first" herein is not limited to an order or a sequence, and is merely intended to facilitate description of the technical solution.

In another possible implementation, there are a same quantity of laser transmitters in each of the N groups of laser transmitters, or quantities of laser transmitters in at least two groups are different.

In another possible implementation, the plurality of laser transmitters include an edge-emitting laser transmitter and a vertical-cavity surface-emitting laser transmitter. The edge-emitting laser transmitter (edge emitting laser, EEL) and the vertical-cavity surface-emitting laser (vertical cavity surface emitting laser, VCSEL) are adjacently arranged. Alternatively, the plurality of lasers may include only VCSEL lasers.

In another possible implementation, the detection device further includes a processing component, configured to control a transmission parameter of each laser transmitter in the laser transmitter array. The transmission parameter includes at least one of a transmitting switch parameter, a transmitting power parameter, a pulsed/continuous light transmission parameter, and a repetitive frequency parameter.

In the plurality of laser transmitters in the transmitting component of the detection device in this embodiment of this application, the transmission parameter of each laser transmitter may be separately controlled by using a combination of an EEL and a VCSEL, to improve ranging precision and anti-interference performance of the detection device.

In another possible implementation, the collimating and shaping component includes a plurality of microlens components. Different microlens components of the plurality of microlens components collimate and shape the laser beam into a linear laser beam in which energy is differently distributed. The processing component is configured to adjust the transmission parameter of each laser transmitter and/or the plurality of microlens components, to adjust an energy distribution of the linear laser beam.

According to the detection device in this embodiment of this application, the processing component may dynamically change a light spot energy distribution based on a sensing result of a previous frame or another requirement. For example, scanning precision/frequency of a region of interest (region of interest, ROI) is improved, to implement fast positioning and high-precision scanning of the region of interest (a vehicle, a person, a building, or a random spot); and scanning precision and power of a non-ROI are reduced, to implement energy saving and environmental protection.

In another possible implementation, the at least one reflection surface is disposed in parallel to an axial direction of a rotating shaft of the scanning rotating mirror component.

In another possible implementation, a middle part of any reflection surface of the at least one reflection surface is disposed in an inclined manner toward a rotating shaft in an axial direction of the rotating shaft of the scanning rotating mirror component, to expand a vertical scanning field of view of the detection device.

In another possible implementation, the transmitting component and the receiving component are located on a same side of the scanning rotating mirror component.

In another possible implementation, the transmitting component and the receiving component are separately located on two sides of the scanning rotating mirror component.

For example, the at least one reflection surface includes a first working reflection surface and a second working reflection surface. The laser beam transmitted by the transmitting component is processed by the collimating and shaping component as the collimated linear laser beam or planar laser beam, and the linear laser beam or the planar laser beam is irradiated to the first working reflection surface. The receiving component is configured to receive a target echo reflected by the second working reflection surface. The first working reflection surface corresponds to an emergent direction of the linear laser beam or the planar laser beam, the target echo includes a reflected signal of the linear laser beam or the planar laser beam, the second working reflection surface corresponds to an incident direction of the reflected signal of the linear laser beam or the planar laser beam, and the first working reflection surface and the second working reflection surface are perpendicular to each other. Alternatively, in another possible implementation, an angle between the first working reflection surface and the second working reflection surface is greater than 0 degrees but is not completely perpendicular (for example, close to perpendicular), or the first working reflection surface is parallel to the second working reflection surface.

Specifically, when the scanning rotating mirror component has four reflection surfaces, the first working reflection surface and the second working reflection surface may be two adjacent reflection surfaces that are perpendicular to each other.

In another possible implementation, the receiving component includes at least a first receiving component and a second receiving component. The first receiving component and the transmitting component are located on a same side of the scanning rotating mirror component, and the second receiving component and the transmitting component are separately located on two sides of the scanning rotating mirror component.

For example, the at least one reflection surface includes a third working reflection surface and a fourth working reflection surface. The laser beam transmitted by the transmitting component is processed by the collimating and shaping component as the collimated linear laser beam or planar laser beam, and the linear laser beam or the planar laser beam is irradiated to the third working reflection surface. The first receiving component is configured to receive a target echo reflected by the third working reflection surface, and the second receiving component is configured to receive a target echo reflected by the fourth working reflection surface. The third working reflection surface corresponds to an emergent direction of the linear laser beam or the planar laser beam, the target echo includes a reflected signal of the linear laser beam or the planar laser beam, the fourth working reflection surface corresponds to an incident direction of the reflected signal of the linear laser beam or the planar laser beam, and the third working reflection surface and the fourth working reflection surface are perpendicular to each other. Alternatively, in another possible implementation, an angle between the third working reflection surface and the fourth working reflection surface is greater than 0 degrees but is not completely perpendicular, or the third reflection surface and the fourth reflection surface are parallel. Specifically, when the scanning rotating mirror component has four reflection surfaces, the third working reflection surface and the fourth working reflection surface may be two adjacent reflection surfaces that are perpendicular to each other.

In another possible implementation, the transmitting component includes at least a first transmitting component and a second transmitting component, the collimating and shaping component includes at least a first collimating and shaping component and a second collimating and shaping component, and the receiving component includes at least a first receiving component and a second receiving component. The scanning rotating mirror component includes a plurality of reflection surfaces. The first transmitting component, the first collimating and shaping component, and the first receiving component, and the second transmitting component, the second collimating and shaping component, and the second receiving component are separately disposed on two opposite sides of the scanning rotating mirror component. The first transmitting component is configured to transmit a first laser beam. The first collimating and shaping component is configured to process the first laser beam as a collimated first linear laser beam or first planar laser beam, and align the first linear laser beam or the first planar laser beam onto a first working reflection surface. The first receiving component is configured to receive a first target echo. The first working reflection surface corresponds to an emergent direction of the first linear laser beam or the first planar laser beam. The first target echo includes a reflected signal of the first linear laser beam or the first planar laser beam. The second transmitting component is configured to transmit a second laser beam. The second collimating and shaping component is configured to process the second laser beam as a collimated second linear laser beam or second planar laser beam, and align the second linear laser beam or the second planar laser beam onto a second working reflection surface. The second receiving component is configured to receive a second target echo. The second working reflection surface corresponds to an emergent direction of the second linear laser beam or the second planar laser beam. The second target echo includes a reflected signal of the second linear laser beam or the second planar laser beam. In this embodiment of this application, a scanning rotating mirror having a plurality of reflection surfaces is used, and a scanning field of view of the detection device is further expanded when a time utilization rate and a point-generating rate are improved by emitting light on two surfaces.

In another possible implementation, the transmitting component includes at least a third transmitting component and a fourth transmitting component, the collimating and shaping component includes at least a third collimating and shaping component and a fourth collimating and shaping component, the receiving component includes at least a fifth receiving component and a sixth receiving component, and the at least one reflection surface includes at least a seventh working reflection surface and an eighth working reflection surface.

For example, the third transmitting component, the third collimating and shaping component, and the fifth receiving component, and the fourth transmitting component, the fourth collimating and shaping component, and the sixth receiving component are separately disposed on two sides of the scanning rotating mirror component. The third transmitting component is configured to transmit a third laser beam. The third collimating and shaping component is configured to process the third laser beam as a collimated third linear laser beam or third planar laser beam, and align the third linear laser beam or the third planar laser beam onto the seventh working reflection surface. The sixth receiving component is configured to receive a third target echo reflected by the eighth working reflection surface. The seventh working reflection surface corresponds to an emergent direction of the third linear laser beam or the third planar laser beam. The third target echo includes a reflected signal of the third linear laser beam or the third planar laser beam. The eighth working reflection surface corresponds to an incident direction of the reflected signal of the third linear laser beam or the third planar laser beam. The seventh working reflection surface and the eighth working reflection surface are perpendicular to each other. Alternatively, in another possible implementation, an angle between the seventh working reflection surface and the eighth working reflection surface is greater than 0 degrees but is not completely perpendicular, or the seventh reflection surface and the eighth reflection surface are parallel. The fourth transmitting component is configured to transmit a fourth laser beam. The fourth collimating and shaping component is configured to process the fourth laser beam as a collimated fourth linear laser beam or fourth planar laser beam, and align the fourth linear laser beam or the fourth planar laser beam onto the eighth working reflection surface. The fifth receiving component is configured to receive a fourth target echo reflected by the seventh working reflection surface. The fourth target echo includes a reflected signal of the fourth linear laser beam or the fourth planar laser beam.

Specifically, when the scanning rotating mirror component has four reflection surfaces, the seventh working reflection surface and the eighth working reflection surface may be two adjacent reflection surfaces that are perpendicular to each other.

In another possible implementation, the detection device further includes a window, the scanning rotating mirror component includes the rotating shaft, the at least one reflection surface rotates around the rotating shaft, and the rotating shaft is disposed between a first plane and a second plane or a curved surface. The first plane is determined based on an optical axial direction of the linear laser beam or the planar laser beam and a light spot extension direction of the linear laser beam or the planar laser beam, and the second plane or the curved surface is a plane or a curved surface on which the window is located.

In another possible implementation, the receiving component includes a single-photon avalanche detector pixel array, the single-photon avalanche detector pixel array includes a plurality of pixels, and the pixel includes one or more single-photon avalanche detectors.

According to the detection device in this embodiment of this application, the receiving component uses a single-photon avalanche diode (single-photon avalanche diode, SPAD) as a detector, and can implement binning of the SPAD as required. In this way, receiving resolution can be improved by using high density of the SPAD array, and a measurement distance can be increased by using high sensitivity of the SPAD and the SPAD bound as a pixel, thereby increasing a dynamic range.

In another possible implementation, the detection device further includes the processing component, configured to control a parameter of the single-photon avalanche detector pixel array based on an electrical signal corresponding to the target echo, to adjust resolution of the receiving component. The parameter of the avalanche detector pixel array includes a pixel interval and/or a quantity of single-photon avalanche detectors in the pixel and/or single-photon avalanche detectors included in the pixel. SPAD pixel density is adjusted based on a perception structure of a previous frame, to achieve a high pixel in an ROI, thereby improving resolution of the ROI.

In another possible implementation, the receiving component includes a silicon photomultiplier array, the silicon photomultiplier array includes a plurality of pixels, and the pixel includes one or more silicon photomultipliers.

In another possible implementation, the detection device further includes the processing component, configured to control a parameter of the silicon photomultiplier array based on an electrical signal corresponding to the target echo, to adjust resolution of the receiving component. The parameter of the silicon photomultiplier array includes a pixel interval and/or a quantity of silicon photomultipliers in the pixel and/or silicon photomultipliers included in the pixel.

In another possible implementation, the linear laser beam includes N linear laser sub-beams, and the M linear laser sub-beams are spliced to form the linear laser beam; or the planar laser beam includes N planar laser sub-beams, and the M planar laser sub-beams are spliced to form the planar laser beam, where M is a positive integer greater than or equal to 2.

In another possible implementation, adjacent linear laser sub-beams of the M linear laser sub-beams are connected or partially overlap in an extension direction of the M linear laser sub-beams; or adjacent planar laser sub-beams of the M planar laser sub-beams are connected or partially overlap.

In another possible implementation, light spots of the M linear laser sub-beams extend along a vertical field of view of the detection device, and the light spots of the M linear laser sub-beams are evenly distributed or not evenly distributed in the vertical field of view of the detection device.

In another possible implementation, a light spot of the linear laser beam extends along a horizontal field of view of the detection device or tilts relative to the horizontal field of view of the detection device.

In another possible implementation, the linear laser beam is irradiated to an entity surface to form a linear light spot or a convex-shaped light spot.

Alternatively, the light spots formed by irradiating the M planar laser sub-beams to the entity surface are of a same shape, and the planar laser beam is irradiated to the entity surface to form a rectangular light spot; or at least two of the light spots formed by irradiating the M planar laser sub-beams to the entity surface are of different shapes, and the planar laser beam is irradiated to the entity surface to form a special-shaped light spot.

In another possible implementation, the detection device further includes a driving device, configured to drive the scanning rotating mirror component to rotate around the rotating shaft. The scanning rotating mirror component includes the plurality of reflection surfaces that are enclosed to form accommodating space, and the driving device is disposed in the accommodating space, thereby further reducing the volume of the detection device.

According to a second aspect, an embodiment of this application further provides a control method of a detection device, including: controlling a transmitting component to transmit a laser beam, where the laser beam is processed by a collimating and shaping component as a collimated linear laser beam; controlling a scanning rotating mirror component to rotate to perform scanning; and controlling a receiving component to receive a target echo, to convert the target echo into an electrical signal, where the target echo includes a reflected signal of the linear laser beam.

In a possible implementation, a transmission parameter of each laser transmitter and/or the plurality of microlens components are controlled based on the electrical signal corresponding to the target echo, to adjust an energy distribution of the linear laser beam.

In this embodiment of this application, scanning manner in which light is emitted in form of lines and received in form of lines is used to significantly improve resolution of the detection device without increasing costs and a volume of the detection device.

In a possible implementation, a parameter of the single-photon avalanche detector pixel array is adjusted based on the electrical signal corresponding to the target echo, to adjust resolution of the receiving component. The parameter of the avalanche detector pixel array includes a pixel interval and/or a quantity of single-photon avalanche detectors in the pixel.

According to the control method of the detection device in this embodiment of this application, a light spot energy distribution is dynamically changed based on a sensing result of a previous frame/another requirement. For example, scanning precision/frequency of a region of interest (region of interest, ROI) is improved, to implement fast positioning and high-precision scanning of the region of interest (a vehicle, a person, a building, or a random spot); and scanning precision and power of a non-ROI are reduced, to implement energy saving and environmental protection.

In a possible implementation, before the controlling a transmitting component to transmit a laser beam, the method further includes: controlling a synchronization component and the scanning rotating mirror component to work, to obtain a synchronization position of a working reflection surface; and controlling, based on the synchronization position, synchronization between the scanning rotating mirror component and the transmitting component.

According to the control method of the detection device in this embodiment of this application, SPAD pixel density is adjusted based on a perception structure of a previous frame, to increase pixels of an ROI, thereby improving resolution of the ROI.

According to a third aspect, an embodiment of this application further provides a chip, including at least one processor and a communications interface. The processor is configured to perform the method according to the second aspect.

According to a fourth aspect, an embodiment of this application further provides a computer-readable storage medium. The computer-readable storage medium stores a computer program. When the computer program is executed on a computer, the computer is enabled to perform the method according to the second aspect.

According to a fifth aspect, an embodiment of this application further provides a laser radar system, including at least the detection device according to the first aspect.

According to a sixth aspect, an embodiment of this application further provides a terminal, including at least the detection device according to the first aspect or the laser radar system according to the fifth aspect.

## BRIEF DESCRIPTION OF DRAWINGS

The following briefly describes the accompanying drawings that need to be used in the descriptions of embodiments or a conventional technology.

FIG. 1 is a schematic diagram of a structure of a laser radar system in a conventional technology;

FIG. 2 is a schematic diagram of a structure of a detection device according to an embodiment of this application;

FIG. 3 shows possible arrangement manners of one column of laser transmitters in a transmitting component of a detection device;

FIG. 4 shows possible arrangement manners of one column of laser transmitters in a transmitting component of a detection device;

FIG. 5 shows an arrangement manner of one column of laser transmitters including EELs and VCSELs;

FIG. 6 is a schematic diagram of shaping a dot-shaped laser beam into a linear laser beam;

FIG. 7a is a schematic diagram of a light spot of a laser beam transmitted by a transmitting component of a detection device;

FIG. 7b is a schematic diagram of another light spot of a laser beam transmitted by a transmitting component of a detection device;

FIG. 7c is a schematic diagram of another light spot energy distribution of a laser beam transmitted by a transmitting component of a detection device;

FIG. 7d is a schematic diagram of another light spot energy distribution of a laser beam transmitted by a transmitting component of a detection device;

FIG. 7e is a schematic diagram of another light spot of a laser beam transmitted by a transmitting component of a detection device;

FIG. 7f is a schematic diagram of another light spot of a laser beam transmitted by a transmitting component of a detection device;

FIG. 7g is a schematic diagram of another light spot of a laser beam transmitted by a transmitting component of a detection device;

FIG. 7h is a schematic diagram of another light spot of a laser beam transmitted by a transmitting component of a detection device;

FIG. 8 is a schematic diagram of emitting light to two surfaces of a polygonal mirror;

FIG. 9 is a schematic diagram of a change of an emergent direction of light when light is emitted to two surfaces of a polygonal mirror and the polygonal mirror rotates by an angle of $\theta 2$;

FIG. 10 is a schematic diagram of emitting light to two surfaces of a polygonal mirror with non-planar reflection surfaces;

FIG. 11 is a schematic diagram of a structure of a polygonal mirror of a detection device;

FIG. 12a to FIG. 12k each are a schematic diagram of deployment of a transmitting component and a receiving component of a detection device;

FIG. 13 is a schematic diagram of a structure of an SPAD detector array;

FIG. 14 is a schematic diagram of a structure of a SiPM array;

FIG. 15 is a schematic diagram of adjusting an energy distribution of a linear laser beam by a detection device according to an embodiment of this application;

FIG. 16 shows a control method of a detection device according to an embodiment of this application;

FIG. 17 shows another control method of a detection device according to an embodiment of this application; and

FIG. 18 is a schematic diagram of a structure of a chip according to an embodiment of this application.

## DESCRIPTION OF EMBODIMENTS

The following describes the technical solutions in embodiments of this application with reference to the accompanying drawings in embodiments of this application.

In descriptions of this application, locations or location relationships indicated by terms "center", "up", "down", "in front of", "behind", "left", "right", "vertical", "horizontal", "top", "bottom", "inside", "outside", and the like are based on locations or location relationships shown in the accompanying drawings, and are merely intended for ease of describing this application and simplifying descriptions, instead of indicating or implying that a mentioned apparatus or component needs to be provided on a specific location or constructed and operated on a specific location, and therefore shall not be understood as limitations on this application.

In the descriptions of this application, it should be noted that, unless otherwise clearly specified and limited, terms "mount", "link", and "connect" should be understood in a broad sense, for example, may mean a fixed connection, may be a detachable connection, or may be a butt joint connection or an integrated connection. A person of ordinary skill in the art can understand specific meanings of the foregoing terms in this application based on specific cases.

This application provides a detection device, including a transmitting component, a collimating and shaping component, a scanning rotating mirror component, a receiving component, a synchronization component, and a control component. The transmitting component is configured to transmit a laser beam. The collimating and shaping component is configured to process the laser beam as a collimated linear laser beam. The scanning rotating mirror component includes at least one reflection surface, configured to reflect the linear laser beam. The receiving component is configured to receive a target echo, where the target echo includes a reflected signal of the linear laser beam. The synchronization component is at least configured to obtain a synchronization position of a working reflection surface in the at least one reflection surface. The synchronization position represents a position at which the working reflection surface initially receives the linear laser beam, and the working reflection surface corresponds to an emergent direction of the linear laser beam. The control component is at least configured to control the scanning rotating mirror component and the transmitting component based on the synchronization position obtained by the synchronization component.

According to the detection device in this embodiment of this application, the collimating and shaping component is disposed to shape the laser beam into the linear laser beam, so that the detection device emits and receives light in form of lines, and high-precision vertical resolution of the detection device can be achieved without increasing a quantity of laser transmitters.

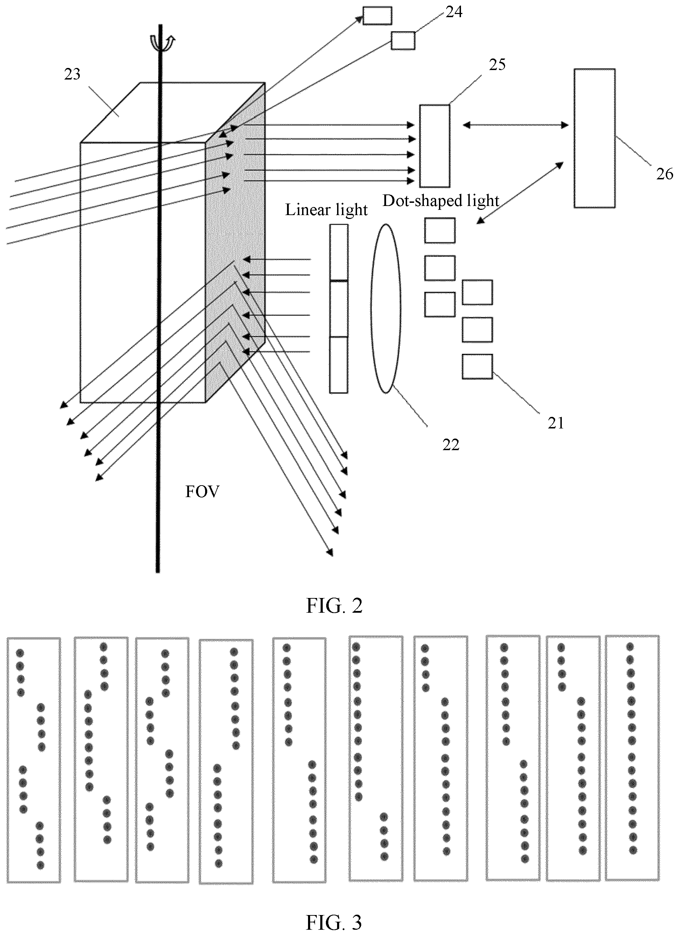

FIG. 2 is a schematic diagram of a structure of a detection device according to an embodiment of this application. As shown in FIG. 2, the detection device includes at least a transmitting component 21, a collimating and shaping component 22, a scanning rotating mirror component 23, a synchronization component 24, a receiving component 24, and a control component 26. The transmitting component 21 is configured to transmit a laser beam. The collimating and shaping component 22 is disposed on a transmission path of the laser beam, and is configured to process the laser beam as a collimated linear laser beam, and align the linear laser beam onto the scanning rotating mirror component 23. The scanning rotating mirror component 23 includes at least one reflection surface, and is configured to reflect the linear laser beam to to-be-scanned target space. The reflection surface may rotate around a rotating shaft. In a rotation process of the reflection surface, an emergent direction of the linear laser beam is changed to scan the target space. The synchronization component 24 is at least configured to obtain a synchronization position of a working reflection surface in the at least one reflection surface. The synchronization position represents a position at which the working reflection surface initially receives the linear laser beam, and the working reflection surface corresponds to an emergent direction of the linear laser beam. The receiving component 25 is configured to receive a target echo, and convert the target echo from an optical signal into an electrical signal corresponding to the target echo. The target echo includes a reflected signal of the linear laser beam. The control component 26 is at least configured to control the scanning rotating mirror component and the transmitting component based on the synchronization position obtained by the synchronization component.

It may be understood that the working reflection surface mentioned in this embodiment is a reflection surface in at least one reflection surface that reflects the linear laser beam or the planar laser beam to the to-be-detected target space, or reflects the target echo to the receiving component to receive the target echo.

The transmitting component includes at least one laser transmitter. A laser beam transmitted by the laser transmitter herein is a dot-shaped laser beam. Therefore, the collimating and shaping component needs to collimate and shape the dot-shaped laser beam into a linear laser beam, to implement a scanning manner in which the detection device emits and receives light in form of lines.

It is easy to understand that the dot-shaped laser beam is a laser beam that forms a dot-shaped light spot after the laser beam is irradiated to an entity surface. For example, if a laser beam is irradiated to a reflection surface of the scanning rotating mirror component to form a dot-shaped light spot, or a laser beam is irradiated to an object in the to-be-scanned target space to form a dot-shaped light spot, or a laser beam is irradiated to a detector of the receiving component to form a dot-shaped light spot, the laser beam is referred to as a dot-shaped laser beam. The linear laser beam is a laser beam that forms a linear light spot after the laser beam is irradiated to the entity surface. For example, if a laser beam is irradiated to a reflection surface of the scanning rotating mirror component to form a linear light spot, or a laser beam is irradiated to an object in the to-be-scanned target space to form a linear light spot, or a laser beam is irradiated to a detector of the receiving component to form a linear light spot, the laser beam is referred to as a linear laser beam.

In one example, the transmitting component includes a laser transmitter array consisting of a plurality of laser transmitters. The laser transmitter array may have one column of laser transmitters or may have a plurality of columns of laser transmitters.

One column of laser transmitters may consist of N groups of laser transmitters. There are X laser transmitters in one group, and both N and X are positive integers. The N groups of laser transmitters may be arranged in a plurality of manners, for example, a multi-segment manner or an interspersed manner. A quantity and arrangement of laser transmitters in each of the plurality of columns of laser transmitters in the laser transmitter array are not limited in this application, and may be completely the same, partially the same, or completely different. One column of laser transmitters in the N groups of laser transmitters may be one or more columns of the plurality of laser transmitters.

The following describes possible arrangement manners of one column of laser transmitters by using N=4 and X=4 as an example. FIG. 3 shows possible arrangement manners of one column of laser transmitters. For example, in the rightmost arrangement manner in FIG. 3, four groups of laser transmitters are arranged in a collinear manner to form one column of laser transmitters, and in other arrangement manners in FIG. 3, at least two groups of laser transmitters are arranged in a non-collinear manner to form one column of laser transmitters.

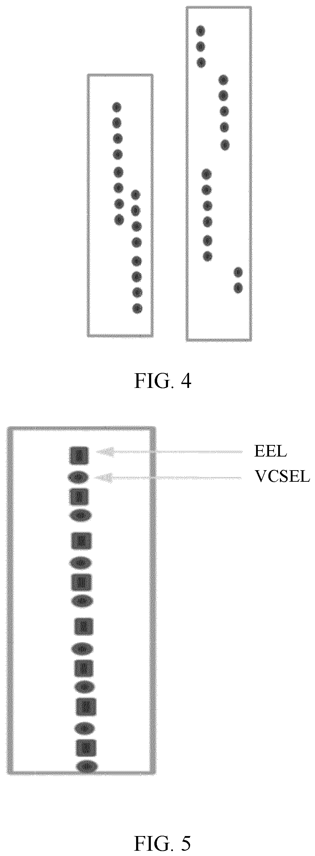

In addition, the N groups of laser transmitters in the column of laser transmitters may alternatively be arranged in a staggered manner. For example, in an arrangement manner of the laser transmitters on the left side of FIG. 4, some (for example, three) laser transmitters are arranged in a staggered manner, to improve power density of a staggered area. Quantities of laser transmitters in all the N groups of laser transmitters may be the same or different. Alternatively, quantities of laser transmitters in at least two groups may be the same, for example, in an arrangement manner of laser transmitters on the right side in FIG. 4.

It should be explained that, arrangement manners of the laser transmitters in the column of laser transmitters in FIG. 3 and FIG. 4 are merely some examples, and are not limited to the foregoing examples. Proper arrangement may be performed as required, to implement spatial isolation of the plurality of laser transmitters in the transmitting component, and reduce impact of laser crosstalk.

A type of the laser transmitter of the transmitting component is not limited. For example, the laser transmitter may be at least one of a solid-state laser, a semiconductor laser, a gas laser, a dye laser, an infrared laser, an X-ray laser, a chemical laser, a free electron laser, an excimer laser, a fiber guided-wave laser, or the like. A proper laser may be selected depending on an actual situation.

The plurality of laser transmitters may be of only one type, for example, an EEL or a VCSEL, or may be a mixture of at least two types of laser transmitters. For example, an EEL and a VCSEL are included, and the EEL and the VCSEL are adjacently arranged (as shown in FIG. 5). Light emitting control can be performed at different moments to detect an object status in a current field of view. Based on a status, the EEL/VCSEL achieves different transmitting powers for different distances, to increase a dynamic power range. Specifically, the plurality of laser transmitters may alternatively include at least one of an EEL and a VCSEL. Further, optionally, the plurality of laser transmitters may further include another laser transmitter.

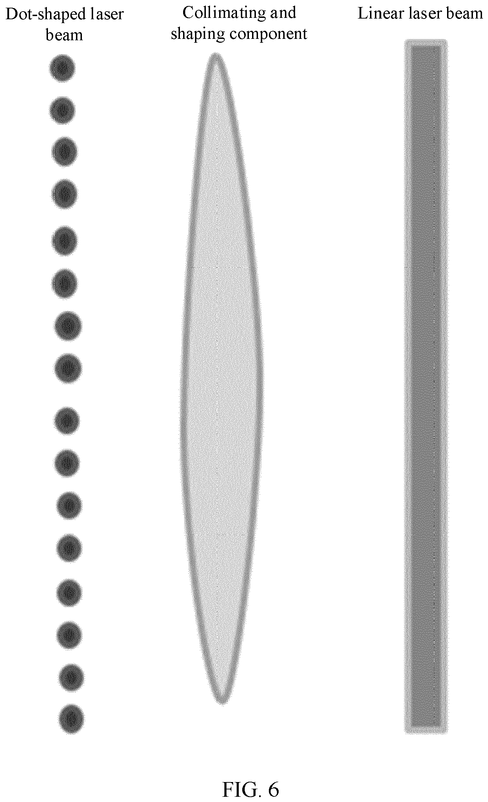

Back to FIG. 2, in an implementation, the collimating and shaping component 22 may include an optical lens/microlens component. A laser beam transmitted by the transmitting component 21 is collimated to reduce a divergence angle of the laser beam, so that energy of the laser beam is concentrated, to implement detection and scanning of the detection device at a longer distance. A dot-shaped laser beam transmitted by the transmitting component 21 is shaped into a linear laser beam (as shown in FIG. 6), so that a foundation is laid for a manner in which the detection device emits and receives light in form of lines.

It should be noted that the "lens" may have several pieces of glass whose shapes, thicknesses, and/or curvatures are different or the same. The lens is not limited to a single piece of glass.

In an implementation, the collimating and shaping component may include a collimator and a beam combiner. The collimator is configured to collimate a plurality of laser beams transmitted by the transmitting component, to reduce a divergence angle of the plurality of laser beams. The beam combiner is configured to shape the plurality of laser beams into a linear laser beam or a planar laser beam with continuous light spot energy. The collimator or the beam combiner may implement a collimation function or a beam shaping function by using a plurality of lenses or microlens that are properly deployed.

It is easy to understand that, the N groups of laser transmitters are vertically arranged to form one column of laser transmitters, a laser beam transmitted by the N groups of laser transmitters is shaped into M linear laser sub-beams by using the collimating and shaping component, and the M linear laser sub-beams are spliced to form one linear laser beam, where N is equal to M. When N=M=1, the linear laser beam is formed by using the collimating and shaping component by shaping a laser beam transmitted by one group of laser transmitters. When both N and M are positive integers greater than or equal to 2, the linear laser beam is formed by using the collimating and shaping component by splicing M linear laser sub-beams formed by shaping a laser beam transmitted by the N groups of laser beams.

In different arrangement manners of the N groups of laser transmitters, different linear laser beams are formed by splicing M linear laser sub-beams that are formed by shaping the transmitted laser beam by using the collimating and shaping component.

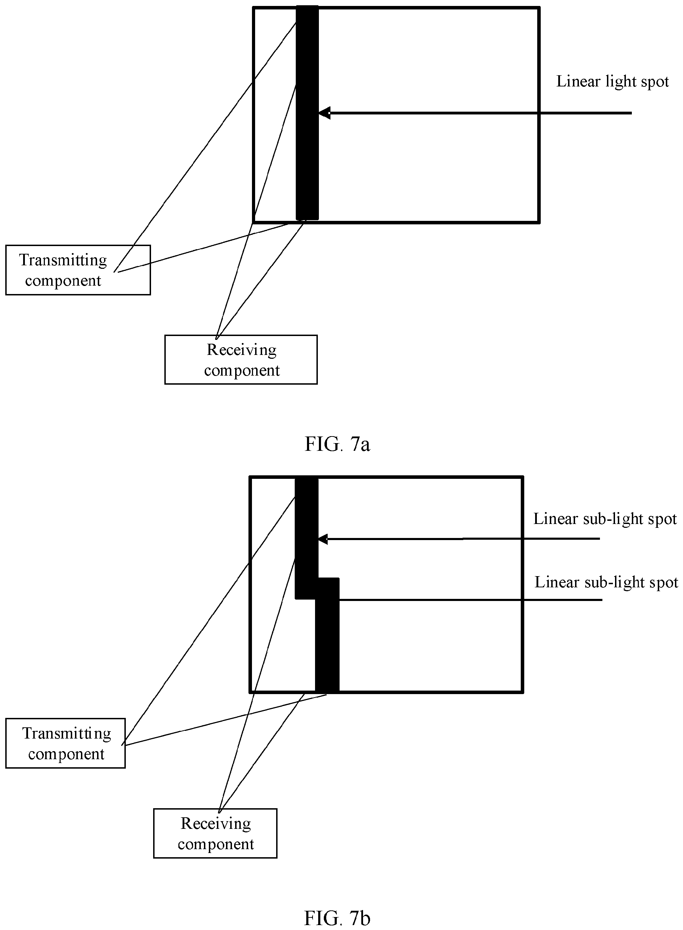

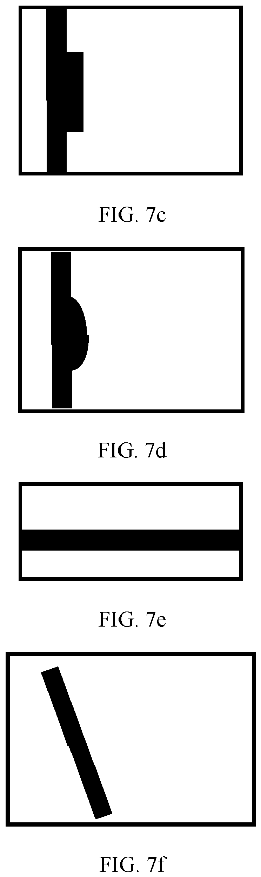

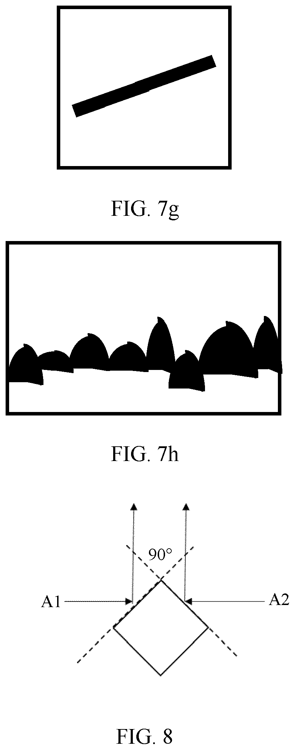

For example, when two groups of laser transmitters are arranged in a collinear manner to form one column of laser transmitters (as shown in the rightmost arrangement manner in FIG. 3), a laser beam transmitted by the two groups of laser transmitters is shaped into two linear laser sub-beams by using the collimating and shaping component, the two linear laser sub-beams are connected to form one linear laser beam, and the linear laser beam is irradiated to an entity surface (for example, a reflection surface of a scanning rotating mirror) to form a linear light spot with a uniform energy distribution (as shown in FIG. 7a). It should be noted that a person skilled in the art can know that, in essence, energy intensity of the light spot is differently distributed as a whole. Energy density of a core area is relatively large, and a shape of the light spot is relatively obvious. However, an edge part gradually extends outwards, the edge part is unclear in shape with gradually decreasing energy intensity, and a recognition degree of the light spot near the edge part is relatively low. Therefore, a light spot with a specific shape in this application may be understood as a light spot that is easily identifiable at a boundary and that is formed by a part with relatively strong energy and relatively high energy density, and is not a whole of the light spot in a technical sense. For example, $\frac{1}{e^2}$ of maximum energy density may be used to define the boundary of the light spot.

When the two groups of laser transmitters are arranged in a non-collinear and staggered manner (as shown in the left arrangement manner in FIG. 4), a laser beam transmitted by the two groups of laser transmitters is shaped into two linear laser sub-beams by using the collimating and shaping component, and the two linear laser sub-beams partially overlap in an extension direction of the two linear laser sub-beams to form one linear laser beam. The linear laser beam is irradiated to an entity surface to form a linear light spot in which a middle part (that is, an overlapping part) has relatively large energy and both sides have relatively small energy (as shown in FIG. 7b). Alternatively, when the two groups of laser transmitters are arranged in a collinear and staggered manner, a laser beam transmitted by the two groups of laser transmitters is shaped into two linear laser sub-beams by using the collimating and shaping component, the two linear laser sub-beams partially overlap in an extension direction of the two linear laser sub-beams to form one linear laser beam, and the linear laser beam is irradiated to an entity surface to form a convex-shaped linear light spot in which a middle part has large energy and protrudes toward one side (that is, an overlapping part) and both sides have relatively small energy (as shown in FIG. 7c and FIG. 7d). In this way, a detection distance of a center FOV of the detection device is increased.

The N groups of laser transmitters may be arranged in a parallel or oblique manner relative to a horizontal plane. A transmitted laser beam is shaped into a linear laser beam by the collimating and shaping component, and the linear laser beam is irradiated to an entity surface to form a linear light spot parallel to or oblique to the horizontal plane (as shown in FIG. 7e to FIG. 7g).

In an example, there are a same quantity of laser transmitters in each of the N groups of laser transmitters, the N groups of laser transmitters are evenly arranged, and a transmitted laser beam is shaped into M linear laser sub-beams by using the collimating and shaping component. When the N groups of laser transmitters are arranged in parallel relative to the horizontal plane, the M linear laser sub-beams are evenly distributed on a horizontal FOV of the detection device. When the N groups of laser transmitters are vertically arranged relative to the horizontal plane, the M linear laser sub-beams are evenly distributed on a vertical FOV of the detection device.

In another example, there are a different quantity of laser transmitters in each of the N groups of laser transmitters, the N groups of laser transmitters are evenly or unevenly arranged, and a transmitted laser beam is shaped into M linear laser sub-beams by using the collimating and shaping component. When the N groups of laser transmitters are arranged in parallel relative to the horizontal plane, the M linear laser sub-beams are unevenly distributed on a horizontal FOV of the detection device. When the N groups of laser transmitters are vertically arranged relative to the horizontal plane, the M linear laser sub-beams are unevenly distributed on a vertical FOV of the detection device.

To ensure that no gap exists during scanning of the detection device, energy of a light spot of a laser beam shaped by the collimating and shaping component needs to be continuous. In addition to a form of the linear laser beam, the laser beam shaped by the collimating and shaping component may alternatively be a planar laser beam. The planar laser beam is irradiated to an entity surface to form a planar light spot, so that no gap exists during object scanning of the detection device.

A laser beam transmitted by the N groups of laser transmitters is shaped by the collimating and shaping component to form M planar laser sub-beams, and the M planar laser sub-beams are spliced to form a planar laser beam with continuous energy.

In an example, laser transmitters in each of the N groups of laser transmitters are arranged in a same manner and of a same quantity. After shaping of the collimating and shaping component, M planar laser sub-beams are formed. The M planar laser sub-beams are irradiated to an entity surface to form M planar sub-light spots of a same shape. The M planar sub-light spots are spliced to form one planar light spot of a regular shape, for example, a rectangular planar light spot or a square planar light spot.

Alternatively, laser transmitters in each of the N groups of laser transmitters are arranged in a different manner and/or of a same quantity. After shaping of the collimating and shaping component, M planar laser sub-beams are formed. The M planar laser sub-beams are irradiated to an entity surface to form M planar sub-light spots of different shapes, and the M planar sub-light spots are spliced to form a planar light spot of an irregular shape, that is, a special-shaped light spot. The special-shaped light spot herein means a light spot with a shape that is different from a rectangle, a square, a circle, an ellipse, or a diamond with a relatively regular shape. The special-shaped light spot may be understood as a light spot that is in a continuous position but has an irregular shape (as shown in FIG. 7h).

According to the detection device provided in this embodiment of this application, the plurality of laser transmitters are arranged, and the collimating and shaping component performs shaping, so that the transmitting component transmits a laser beam of a light spot with continuous energy, thereby resolving a crosstalk problem to some extent. The scanning rotating mirror component 23 includes a rotating mirror. The rotating mirror may be a single-sided reflector having one reflection surface, or may be a polygonal mirror having a plurality of reflection surfaces, for example, a four-sided mirror having four reflection surfaces (as shown in FIG. 2). The four-sided mirror is disposed on a transmission path of the linear laser beam, a transmission working reflection surface in the four-sided mirror transmits the linear laser beam to target space, and the four-sided mirror rotates around a central axis to change an emergent direction of the linear laser beam, to scan the target space. The transmission working reflection surface is a reflection surface that is in the four-sided mirror and that corresponds to the emergent direction of the linear laser beam, that is, a reflection surface that is in the four-sided mirror and that is irradiated by the linear laser beam collimated and shaped by the collimating and shaping component.

It is easy to understand that as the four-sided mirror rotates, the linear laser beam is emitted to different reflection surfaces in the four-sided mirror. Therefore, the transmission working reflection surface is switched to a different reflection surface in the four-sided mirror accordingly.

In an example, the four-sided mirror rotates one circle to form four frames of data. Compared with a case in which a single-sided reflector rotates one circle to form one frame of data, this greatly increases a proportion of an effective time of the scanning rotating mirror component to an entire rotation period, and can fully utilize repetitive frequency efficiency of the laser. In addition, compared with a pendulum lens, because the scanning rotating mirror component always moves in one direction, round-trip movement of the pendulum lens does not occupy time of a scanning motion period, thereby increasing a proportion of effective time to the entire scanning period.

It may be understood that one frame of data of the detection device corresponds to an electrical signal corresponding to a target echo generated by scanning on one working reflection surface of the rotating mirror in the scanning rotating mirror component. Therefore, the four-sided mirror rotates one circle (360°), and the detection device forms four frames of data. When the rotating mirror in the scanning rotating mirror component is a single-sided reflector, because the single-sided reflector has only one working reflection surface, only one frame of data can be formed when the single-sided reflector rotates one circle.

A time utilization rate of the detection device in this application is $P \times FOV/(360 \times 2)$, where P represents a quantity of reflection surfaces of the polygonal mirror, and FOV is a field of view corresponding to one reflection surface. Therefore, the rotating mirror in the scanning rotating mirror component of the detection device in this application is a polygonal mirror. Compared with a single-sided mirror, the time utilization rate of the detection device is increased by P times, and the time utilization rate of the detection device is greatly increased.

Specifically, the scanning rotating mirror component further includes a rotating shaft and a driving device (for example, a drive motor) that drives the rotating shaft to rotate. The driving device drives the rotating shaft to rotate, and drives the four-sided mirror to rotate around the rotating shaft.

In an example, the driving device is disposed inside the four-sided mirror, to further reduce a volume of the detection device. For example, for the polygonal mirror, a quadrangular structure is formed by enclosing four reflectors, the quadrangular structure has internal accommodating space, and the driving device is disposed in the accommodating space.

It may be understood that it is merely an example that the rotating mirror in the scanning rotating mirror component in this embodiment of this application is a four-sided mirror. The rotating mirror in the scanning rotating mirror component may alternatively be a polygonal mirror having another quantity of reflection surfaces, for example, a reflector having five, six, or eight reflection surfaces. A quantity of reflection surfaces of the polygonal mirror is related to a frame rate, a detection distance, a field of view (field of view, FOV) standard, and the like. A proper polygonal mirror may be selected as the rotating mirror in the scanning rotating mirror component depending on an actual requirement.

A metal coating may be used as a reflection surface for the polygonal mirror. The metal is not limited to aluminum/aluminum alloy, and the coating includes but is not limited to a metal film, a dielectric film, and the like. Alternatively, the polygonal mirror may be implemented in a manner in which a frame is attached to a mirror surface, and a framed mirror surface may be glass, plastic, or the like.

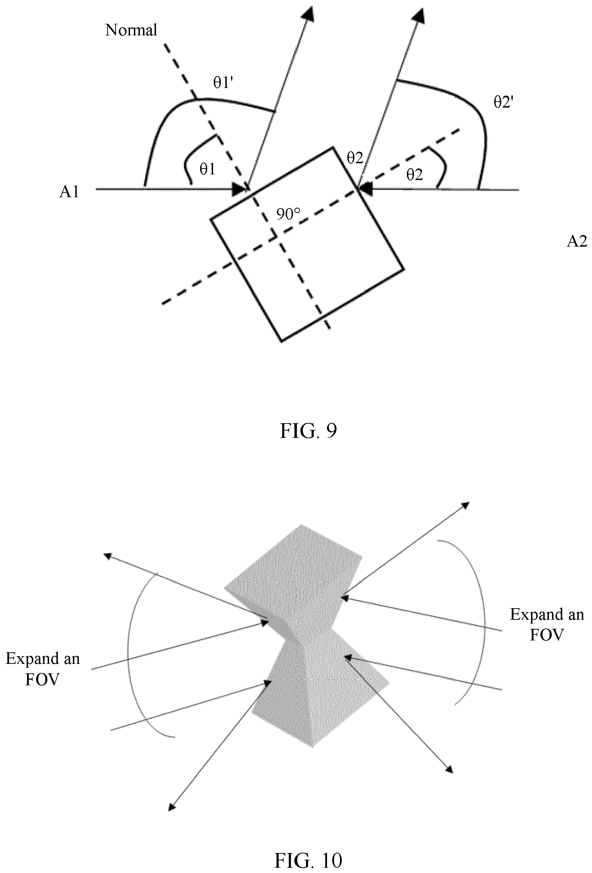

In the detection device in this embodiment of this application, light may be emitted to a single surface of the polygonal mirror, or light may be emitted to a plurality of surfaces of the polygonal mirror. For example, light is simultaneously emitted to both surfaces (a surface A1 and a surface A2) of the polygonal mirror, to achieve a larger FOV (as shown in FIG. 8 and FIG. 9). At least one of the plurality of reflection surfaces of the polygonal mirror is disposed in parallel to an axial direction of a rotating shaft of the scanning rotating mirror component. In other words, the at least one of the plurality of reflection surfaces of the polygonal mirror is a plane (as shown in FIG. 8 or FIG. 9).

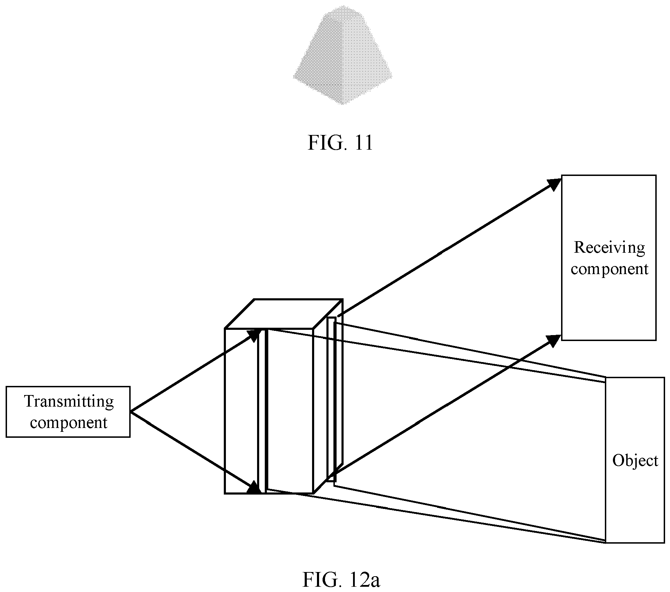

The reflection surface of the polygonal mirror may alternatively be designed to be in another shape. For example, a middle part of the reflection surface tilts toward the rotating shaft in the axial direction of the rotating shaft. Optionally, the polygonal mirror is a symmetrical oblique mirror. In the detection device, light may be emitted to a single surface of the polygonal mirror, or light may be emitted to a plurality of surfaces of the polygonal mirror (as shown in FIG. 10). Alternatively, the reflection surfaces of the polygonal mirror gradually tilt toward the rotating shaft along the axial direction of the rotating shaft, and each reflection surface of the polygonal mirror is a trapezoid (as shown in FIG. 11). A shape of the reflection surface of the polygonal mirror is not limited in this embodiment of this application, and a proper reflection surface shape may be designed as required.

In one example, the reflection surface of the scanning rotating mirror component is disposed close to a window, to further increase the horizontal FOV of the detection device. For example, the rotating shaft of the scanning rotating mirror component is disposed between a plane determined by an optical axial direction of the linear laser beam or the planar laser beam and a light spot extension direction of the linear laser beam or the planar laser beam and a plane or a curved surface on which the window is located, so that the reflection surface of the rotating mirror is closer to the window, and a laser beam shaped by the shaping component is reflected out of the window at a larger angle, thereby increasing the horizontal FOV of the detection device.

The transmitting component and the receiving component are deployed in a plurality of manners. For example, one transmitting component and one receiving component are deployed to implement one-transmission and one-reception. The transmitting component and the receiving component may be deployed on a same side of the scanning rotating mirror component. In other words, reception and transmission are performed on a same side. Alternatively, the transmitting component and the receiving component may be separately deployed on two sides of the scanning rotating mirror component. In other words, reception and transmission are performed on different sides. Alternatively, when the scanning rotating mirror is a polygonal mirror, and the polygonal mirror has two reflection surfaces perpendicular to each other (for example, the polygonal mirror is a four-sided mirror, and two adjacent reflection surfaces of the four-sided mirror are both 90°, that is, are perpendicular to each other), one transmitting component and two receiving components are deployed, where one receiving component is deployed on a side the same as that of the transmitting component, and the other receiving component is deployed on a side different that of the transmitting component, to implement one-transmission and two-reception. Alternatively, a plurality of (for example, two) transmitting components and a plurality of (for example, two) receiving components are deployed. The plurality of transmitting components separately transmit laser beams to different reflection surfaces of the polygonal mirror, and the plurality of receiving components separately receive a plurality of target echoes, so that light is emitted to a plurality of surfaces of the polygonal mirror, thereby increasing an FOV of the detection device. Deployment manners of the transmitting components and the receiving components may be determined as required. This is not limited in this application. It should be noted that, due to a limitation of a manufacturing process, complete verticality may not be achieved, and an error caused by the manufacturing process may be ignored in this application.

It should be explained that, that the two components are deployed on a same side of the scanning rotating mirror component indicates that the two components correspond to a same working reflection surface of the scanning rotating mirror component. Specifically, the two components separately reflect incident light and/or receive reflected light by using a same working reflection surface of the scanning rotating mirror component. For example, the transmitting component and the receiving component are deployed on a same side of the scanning rotating mirror component, which indicates that the transmitted light of the transmitting component is incident to a working reflection surface of the scanning rotating mirror component and is reflected to a detection region, and that the receiving component receives reflected light from the same working reflection surface. That the two components are deployed on two sides of the scanning rotating mirror component indicates that the two components respectively correspond to different working reflection surfaces of the scanning rotating mirror component. Specifically, the two components separately reflect incident light and/or receive reflected light by using different working reflection surfaces of the scanning rotating mirror component. For example, the transmitting component and the receiving component are deployed on two sides of the scanning rotating mirror component, which indicates that the transmitted light of the transmitting component is incident to a working reflection surface of the scanning rotating mirror component and is reflected to a detection region, and the receiving component receives reflected light from another working reflection surface of the scanning rotating mirror component.

For example, as shown in FIG. 2, one transmitting component and one receiving component are deployed in the detection device. The transmitting component 21 and the receiving component 25 are deployed on a same side of the scanning rotating mirror component 23, and a laser beam transmitted by the transmitting component 21 is processed by the collimating and shaping component 22 as a linear laser beam or a planar laser beam, and the linear laser beam or the planar laser beam is aligned onto a working reflection surface of the scanning rotating mirror component. The working reflection surface reflects the linear laser beam or the planar laser beam to to-be-scanned target space, the linear laser beam or the planar laser beam is reflected to form a target echo when encountering an obstacle, and the target echo is incident to the working reflection surface, and is reflected by the working reflection surface to the receiving component. In other words, if the transmitting component and the receiving component are deployed on a same side of the scanning rotating mirror component, only one working reflection surface is required to implement reception and transmission of the linear laser beam.

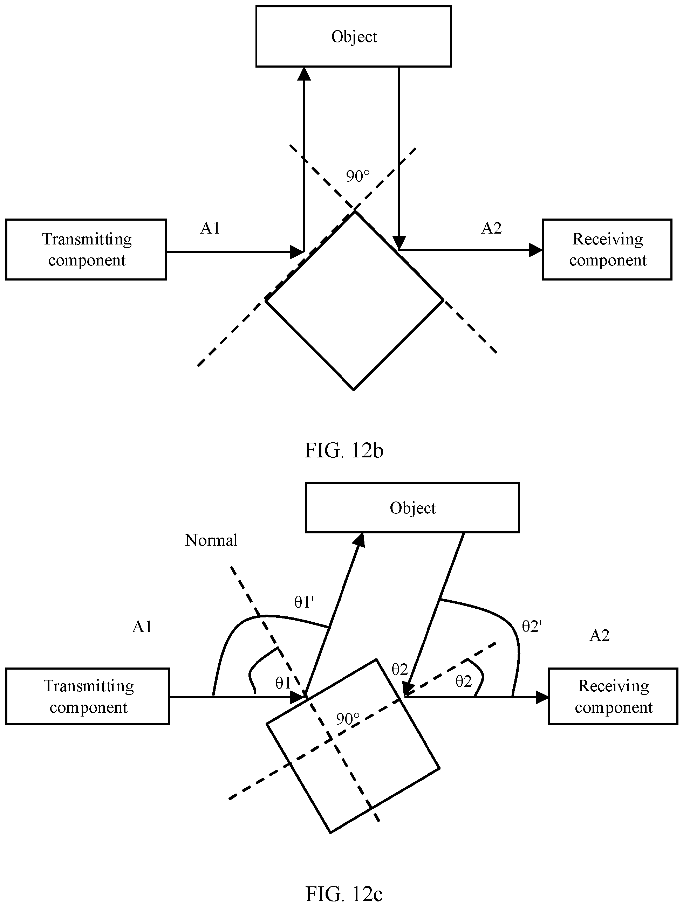

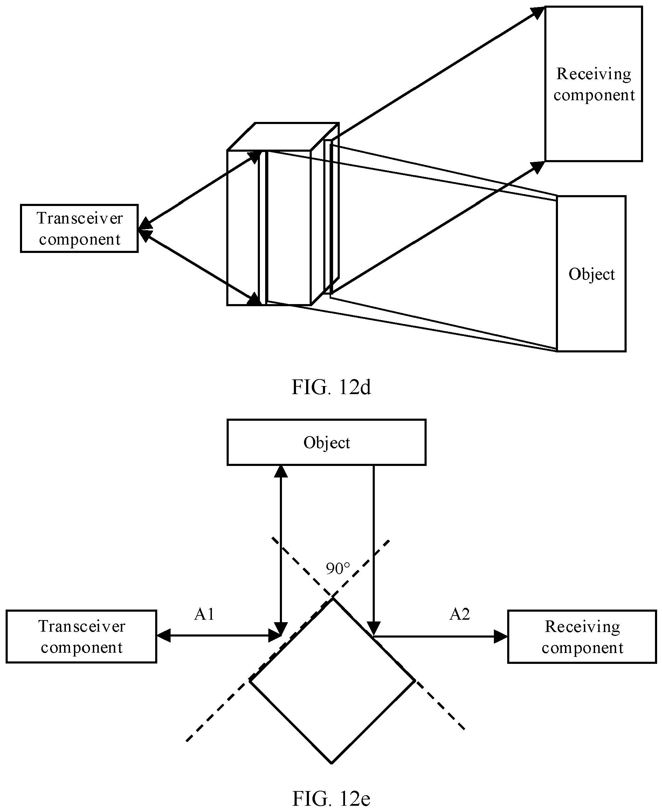

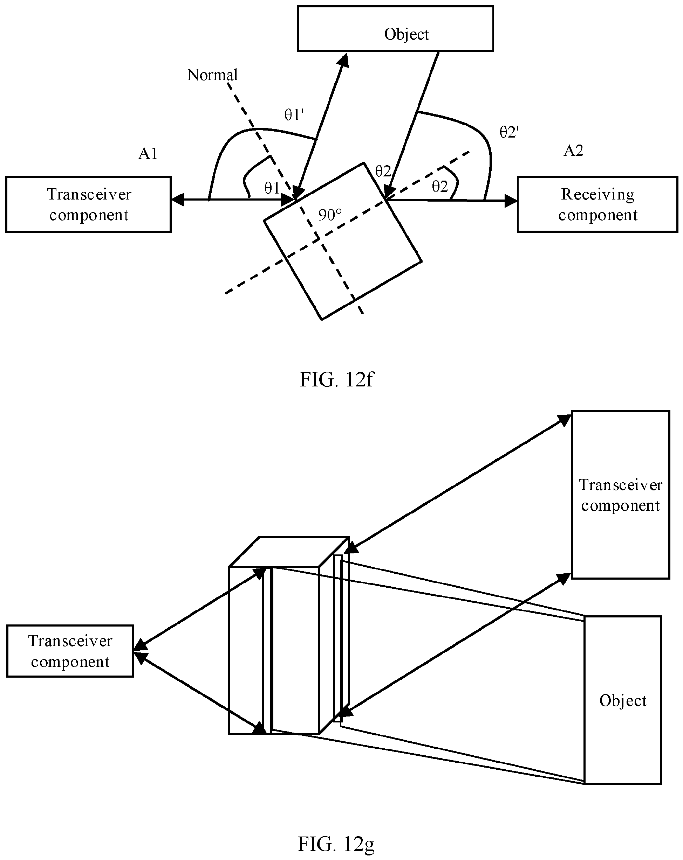

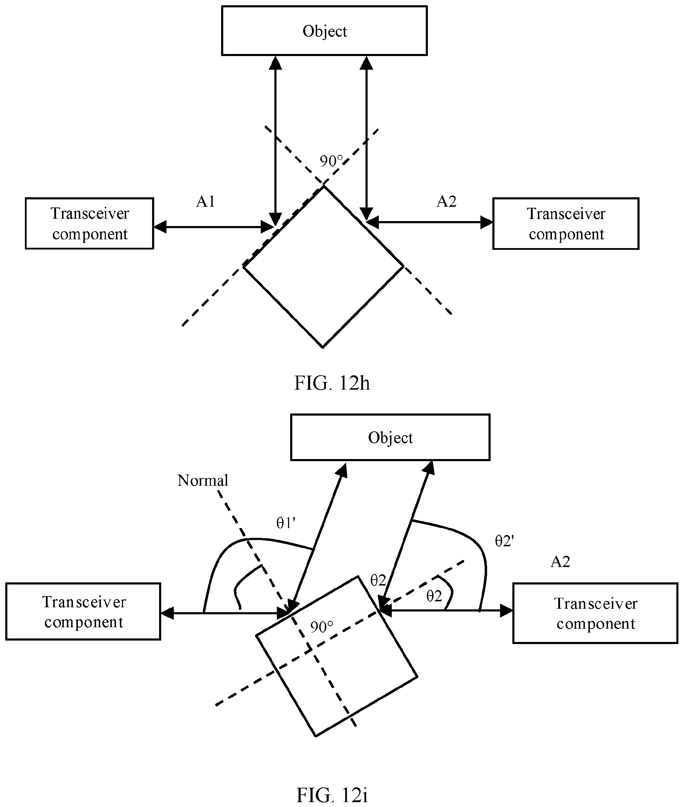

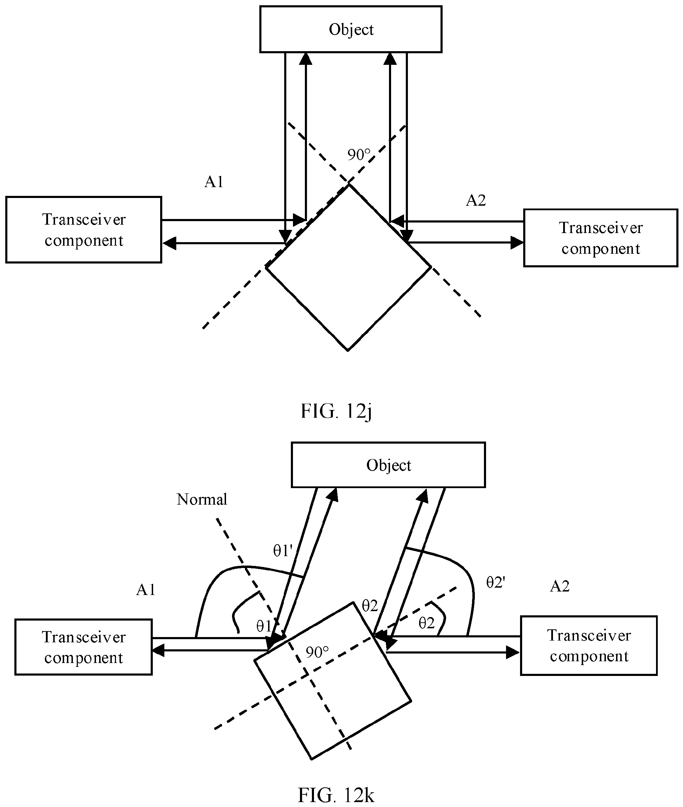

In another example, as shown in FIG. 12a to FIG. 12c, the scanning rotating mirror is a polygonal mirror having two reflection surfaces that are perpendicular to each other, for example, is a four-sided mirror. One transmitting component and one receiving component are deployed in the detection device, and the transmitting component and the receiving component are separately deployed on two sides of the four-sided mirror. The laser beam transmitted by the transmitting component is processed by the collimating and shaping component (not shown in FIG. 12a to FIG. 12c) as a collimated linear laser beam or planar laser beam, and the linear laser beam or the planar laser beam is irradiated to a first working reflection surface (a surface A1 in the figure). The receiving component receives a target echo reflected by a second working reflection surface (a surface A2 in the figure). The first working reflection surface corresponds to an emergent direction of the linear laser beam or the planar laser beam. The target echo includes a reflected signal of the linear laser beam or the planar laser beam. The second working reflection surface corresponds to an incident direction of the reflected signal of the linear laser beam or the planar laser beam, and reflects the reflected signal of the linear laser beam or the planar laser beam to the receiving component for reception. The first working reflection surface and the second working reflection surface are perpendicular to each other. The transmitting component and the receiving component are disposed on different sides of the polygonal mirror, which helps reduce a volume of the detection device.

In another example, as shown in FIG. 12d to FIG. 12f, the scanning rotating mirror is a polygonal mirror having two reflection surfaces that are perpendicular to each other, for example, is a four-sided mirror. One transmitting component and two receiving components are deployed in the detection device. One receiving component and the transmitting component are located on a same side of the polygonal mirror, and the other receiving component and the transmitting component are located on different sides of the polygonal mirror. The laser beam transmitted by the transmitting component is processed by the collimating and shaping component (not shown in the figure) as a collimated linear laser beam or planar laser beam, and the linear laser beam or the planar laser beam is irradiated to a third working reflection surface. The receiving component on a side the same as that of the transmitting component receives a target echo reflected by the third working reflection surface, and the receiving component on a side different from that of the transmitting component receives a target echo reflected by a fourth working reflection surface. The third working reflection surface corresponds to an emergent direction of the linear laser beam or the planar laser beam. The target echo includes a reflected signal of the linear laser beam or the planar laser beam. The fourth working reflection surface corresponds to an incident direction of the reflected signal of the linear laser beam or the planar laser beam, and reflects the reflected signal of the linear laser beam or the planar laser beam to the receiving component on a side different from that of the transmitting component for reception. The third working reflection surface and the fourth working reflection surface are perpendicular to each other. In this way, the detection device makes full use of the laser beam transmitted by the transmitting component, and the FOV of the detection device is increased.

It may be understood that in FIG. 12d to FIG. 12f, for brevity, the transmitting component and the receiving component on a side the same as that of the transmitting component are referred to as a transceiver component, which is configured to transmit a laser beam and receive a target echo.

In another example, as shown in FIG. 12g to FIG. 12i, two transmitting components and two receiving components are deployed in the detection device. The scanning rotating mirror component includes a polygonal mirror having a plurality of reflection surfaces. The transmitting component includes at least a first transmitting component and a second transmitting component. The collimating and shaping component includes at least a first collimating and shaping component and a second collimating and shaping component (not shown in the figure). The receiving component includes at least a third receiving component and a fourth receiving component. The first transmitting component, the first collimating and shaping component, and the first receiving component, and the second transmitting component, the second collimating and shaping component, and the second receiving component are separately disposed on two opposite sides of the scanning rotating mirror component (or may be disposed on any two different angles or sides of the scanning rotating mirror component, and the two opposite sides are used as an example for description herein). The first transmitting component is configured to transmit a first laser beam. The first collimating and shaping component is configured to process the first laser beam as a collimated first linear laser beam, and align the first linear laser beam onto a fifth working reflection surface (a surface A1). The third receiving component receives a first target echo. The fifth working reflection surface corresponds to an emergent direction of the first linear laser beam, and the first target echo includes a reflected signal of the first linear laser beam. The second transmitting component transmits a second laser beam. The second collimating and shaping component processes the second laser beam as a collimated second linear laser beam, and aligns the second linear laser beam onto a sixth working reflection surface (a surface A2). The fourth receiving component receives a second target echo. The sixth working reflection surface corresponds to an emergent direction of the second linear laser beam, and the second target echo includes a reflected signal of the second linear laser beam. In this way, the transmitting component and the receiving component on the same side use a same working reflection surface to implement detection and scanning and receive a target echo, to implement reception and transmission of a coaxial optical path of the detection device. In other words, based on optical path reversibility, the laser beam transmitted by the transmitting component and the target echo received by the receiving component on a side the same as that of the transmitting component are coaxial.

It may be understood that in FIG. 12g to FIG. 12i, for brevity, the transmitting component and the receiving component on a side the same as that of the transmitting component are referred to as a transceiver component, which is configured to transmit a laser beam and receive a target echo.

In another example, as shown in FIG. 12j to FIG. 12k, two transmitting components and two receiving components are deployed in the detection device. The scanning rotating mirror is a polygonal mirror having two reflection surfaces that are perpendicular to each other, for example, is a four-sided mirror. The transmitting component includes at least a third transmitting component and a fourth transmitting component. The collimating and shaping component includes at least a third collimating and shaping component and a fourth collimating and shaping component (not shown in the figure). The receiving component includes at least a fifth receiving component and a sixth receiving component. The third transmitting component, the third collimating and shaping component, and the fifth receiving component, and the fourth transmitting component, the fourth collimating and shaping component, and the sixth receiving component are separately disposed on two sides of the polygonal mirror. The third transmitting component transmits a third laser beam. The third collimating and shaping component processes the third laser beam as a collimated third linear laser beam or third planar laser beam, and aligns the third linear laser beam or the third planar laser beam onto a seventh working reflection surface. The sixth receiving component receives a third target echo reflected by an eighth working reflection surface. The seventh working reflection surface corresponds to an emergent direction of the third linear laser beam or the third planar laser beam. The third target echo includes a reflected signal of the third linear laser beam or the third planar laser beam. The eighth working reflection surface corresponds to an incident direction of the reflected signal of the third linear laser beam or the third planar laser beam. The seventh working reflection surface and the eighth working reflection surface are perpendicular to each other. The fourth transmitting component transmits a fourth laser beam. The fourth collimating and shaping component processes the fourth laser beam as a collimated fourth linear laser beam or fourth planar laser beam, and aligns the fourth linear laser beam or the fourth planar laser beam onto the eighth working reflection surface. The fifth receiving component receives a fourth target echo reflected by the seventh working reflection surface. The fourth target echo includes a reflected signal of the fourth linear laser beam or the fourth planar laser beam. In this way, different working reflection surfaces are used to implement detection and scanning of a same linear laser beam or planar laser beam and receive a target echo, to implement cross reception and transmission. In other words, an optical path of the linear laser beam or planar laser beam transmitted by the transmitting component is different from an optical path of the target echo, to implement off-axis reception and transmission of the linear laser beam or planar laser beam.

It may be understood that in FIG. 12j to FIG. 12k, for brevity, the transmitting component and the receiving component on a side the same as that of the transmitting component are referred to as a transceiver component, which is configured to transmit a laser beam and receive a target echo.

It should be noted that the scanning rotating mirror component mentioned above may rotate in a running process of the detection device. Therefore, a person skilled in the art may understand that the foregoing figures are merely intended to describe a position relationship between the reflection surface of the scanning rotating mirror component and the transmitting component and the receiving component and a corresponding optical path status in an actual running process, and do not represent a fixed position relationship.

Back to FIG. 2, a function of the synchronization component 24 is to obtain a synchronization position of a working reflection surface in at least one reflection surface of the rotating mirror. The synchronization position represents a position at which the working reflection surface initially receives the linear laser beam. When the synchronization component detects that the rotating mirror rotates to the synchronization position, the control component controls the scanning rotating mirror component to continue to rotate and the transmitting component to work and transmit a laser beam.

In an example, the synchronization component may include an encoding disk for detecting a rotation angle of the rotating mirror, and the rotation angle of the rotating mirror is obtained by using the encoding disk, to learn of the synchronization position of the working reflection surface. Alternatively, the synchronization component may include a laser transceiver component. A mark is provided on an edge of the polygonal mirror, and the laser transceiver component emits light to the edge of the polygonal mirror. When the laser transceiver component is irradiated to the mark, the synchronization position of the working reflection surface is acquired. A specific manner of obtaining the synchronization position by the synchronization component is not specifically limited in this application, and the synchronization position may be obtained in a plurality of possible manners.

When the rotating mirror is a polygonal mirror, the synchronization apparatus may further obtain a reflection surface of the polygonal mirror that is used as a working reflection surface, and coordinate with the transmitting component and the receiving component to implement control as required. For example, the synchronization apparatus obtains a reflection surface of the polygonal mirror that is used as a working reflection surface, and cooperates with the transmitting component and the receiving component to implement different laser emission waveforms, pulse coding, or the like when the reflection surface is used as a working reflection surface and another reflection surface is used as a working reflection surface, or achieve different ROIs, resolution, or the like.

In an example, the receiving component 25 includes an SPAD detector pixel array, which includes one or more pixels. One pixel includes one or more SPADs. A receiving working reflection surface in the scanning rotating mirror component 23 reflects a target echo signal to the one or more pixels of the SAPD detector pixel array to form a linear light spot. The SPAD detector pixel array converts the target echo signal from an optical signal into an electrical signal, to implement a manner in which the detection device emits and receives light in form of lines. It should be explained that the receiving working reflection surface of the scanning rotating mirror component is a reflection surface that is in the at least one reflection surface and that corresponds to an incident direction of the target echo signal. In other words, the receiving working reflection surface is a reflection surface that is in the at least one reflection surface and that is irradiated by the target echo.

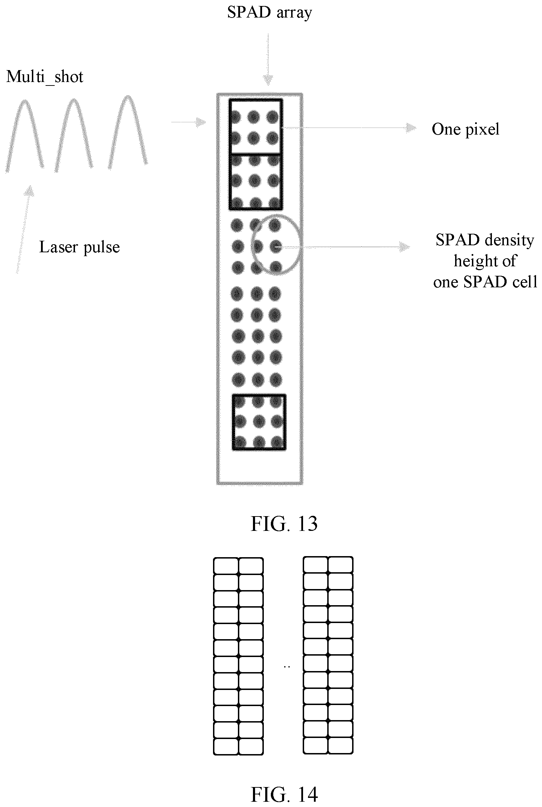

The SPAD detector pixel array is different from a receiving system of an existing pan-tilt laser radar. In the pan-tilt laser radar, detectors are discrete. One detector is used as one receiving pixel, a pixel gap is relatively large, resolution is not high, and integration is not high. In the receiving component of the detection device in this embodiment of this application, a detector array IC is used as a receiving component, and a gap between adjacent pixels is relatively small, and resolution is relatively high. A light source of the transmitting component forms a linear light source by using a collimating and shaping component, and the receiving component receives a target echo in an array mode, so that there are a large quantity of pixels. Compared with a mode in which light is emitted in form of dots and received in form of dots, receiving energy of a single pixel decreases, which affects a detection distance. Therefore, the detection distance can be increased by using the following three aspects: 1. An SPAD technology is used for the receiving component, to improve detection sensitivity of weak signals and increase the detection distance. 2. A plurality of SPAD units form an SPAD group, to increase a pixel photosensitive area and increase the detection distance. 3. Each laser in the transmitting component transmits pulsed lasers for a plurality of times, to fully utilize a repetitive frequency of the laser and improve transmitting power. A relatively long detection distance is achieved by using the foregoing aspects (as shown in FIG. 13).

In another example, the receiving component 25 includes a silicon photomultiplier (Silicon photomultiplier, SiPM) array. The silicon photomultiplier array includes a plurality of pixels, and each pixel includes at least one silicon photomultiplier. As shown in FIG. 14, each grid in the figure represents one pixel, one SiPM or a plurality of SiPMs form one pixel, and a plurality of SiPM pixels are arranged to form a SiPM pixel array. A receiving working reflection surface in the scanning rotating mirror component 23 reflects a target echo signal to one or more pixels in the SiPM pixel array to form a linear light spot, and the SiPM pixel array converts the target echo signal from an optical signal into an electrical signal, so that the detection device emits and receives light in form of lines. Certainly, the transceiver component of the detection device in this embodiment of this application is not limited to the SPAD detector array or the SiPM array, and an APD detector array or a detector array with both an SPAD and an APD may alternatively be used.

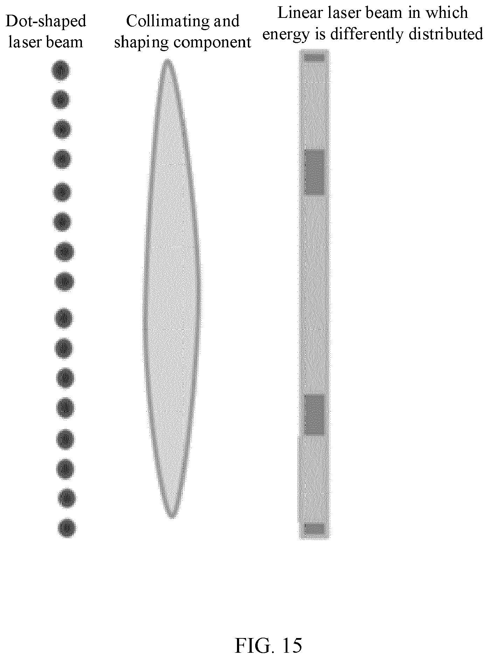

The detection device in this embodiment of this application further includes a processing component. The processing component may adjust an energy distribution of the linear laser beam by adjusting a transmission parameter of each laser transmitter and/or a parameter of the collimating and shaping component (as shown in FIG. 15), to dynamically change a light spot energy distribution based on the electrical signal corresponding to the target echo, or change a light spot energy distribution depending on another possible requirement. For example, before the detection device is delivered from a factory, the processing component performs parameter calibration on the detection device by adjusting a transmission parameter of each laser transmitter and/or a parameter of a collimating and shaping component.

For example, the transmission parameter of each laser transmitter in the laser transmitter array may be controlled by the processing component. The transmission parameter includes at least one of a transmitting switch parameter, a transmitting power parameter, a pulsed/continuous light transmission parameter, and a repetitive frequency parameter. The processing component controls the transmission parameters of each laser transmitter in the laser transmitter array, to further adjust the energy distribution of the linear laser beam or meet another possible requirement.

It is easy to understand that, the transmitting switch parameter represents turn-on or turn-off of each laser transmitter in the laser transmitter array, and is used to control turn-on or turn-off of each laser transmitter. The transmitting power parameter represents a transmitting power of each laser transmitter in the laser transmitter array, and is used to control a transmitting power of each laser transmitter for transmitting a laser beam. The pulsed/continuous light transmission parameter represents that each laser transmitter transmits a pulsed laser or a continuous laser, and is used to control each laser transmitter to transmit a pulsed laser or continuous laser. The repetitive frequency parameter represents a quantity of pulses generated per second when each laser transmitter in the laser transmitter array transmits a pulse laser, and is used to control a quantity of pulses transmitted per second by each laser transmitter.

The collimating and shaping component includes a plurality of microlens components. Each microlens component in the plurality of microlens components collimates and shapes the laser beam into a linear laser beam in which energy is differently distributed. The processing component adjusts and/or replaces different microlens components of the plurality of microlens components, to achieve the linear laser beam in which energy is differently distributed.

For another example, the processing component may further adjust an energy distribution of the linear laser beam or meet another possible requirement by adjusting a transmission parameter of each laser transmitter in the laser transmitter array and a parameter of the collimating and shaping component, for example, adjusting and/or replacing different microlens components of the plurality of microlens components.

According to the detection device in this embodiment of this application, the processing component may dynamically change a light spot energy distribution based on a sensing result of a previous frame or another requirement. For example, scanning precision/frequency of a region of interest (region of interest, ROI) is improved, to implement fast positioning and high-precision scanning of the region of interest (a vehicle, a person, a building, or a random spot); and scanning precision and power of a non-ROI are reduced, to implement energy saving and environmental protection.

In another example, the processing component may further control and adjust a parameter of a single-photon avalanche detector pixel array or a SiPM array based on the electrical signal corresponding to the target echo, to adjust resolution of the receiving component. The parameter of the avalanche detector pixel array includes a pixel interval and/or a quantity of single-photon avalanche detectors in a pixel and/or single-photon avalanche detectors included in a pixel. The parameter of the SiPM array includes a pixel interval and/or a quantity of silicon photomultipliers in a pixel and/or silicon photomultipliers included in a pixel. SPAD or SiPM pixel density is adjusted based on a perception structure of a previous frame, to achieve a high pixel in an ROI, thereby improving resolution of the ROI.

For example, for an ROI, SPAD or SiPM pixel density may be increased by reducing an interval between pixels corresponding to the ROI, or a quantity of single-photon avalanche detectors in a pixel, or a quantity of silicon photomultipliers in a pixel. Alternatively, single photon avalanche detectors included in a pixel or silicon photomultipliers included in a pixel are dynamically adjusted. In other words, a boundary of pixels is adjusted. For example, a start position and an end position of the boundary of pixels are adjusted. In other words, the avalanche detector pixel array or the SiPM array has a sliding window function, and different single photon avalanche detectors or silicon photomultipliers are selected by a pixel frame by sliding the pixel frame. Alternatively, the boundary of pixels is enlarged to select more single-photon avalanche detectors or silicon photomultipliers, so that a target echo corresponding to an ROI is located in a same pixel, thereby achieving a high pixel in the ROI and improving resolution of the ROI.

An embodiment of this application further provides a control method of a detection device.

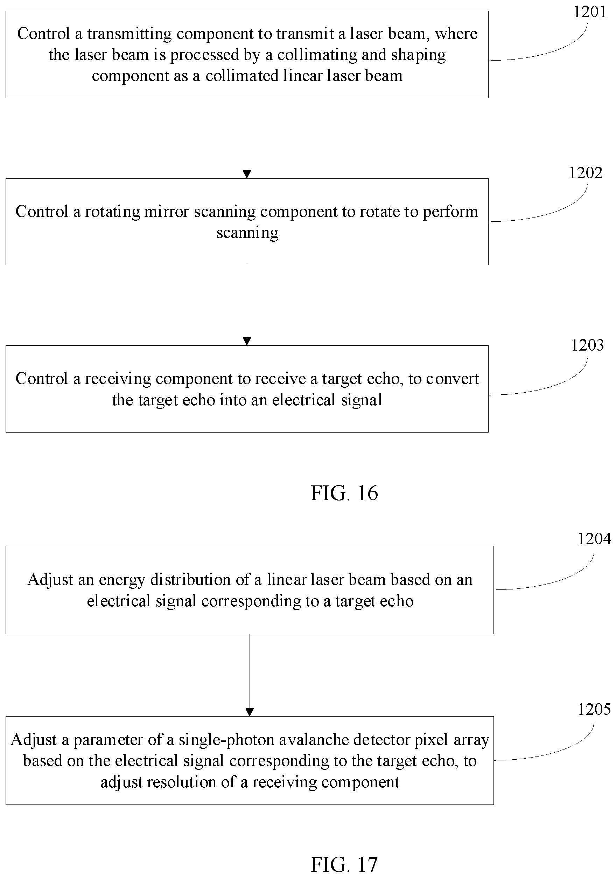

FIG. 16 shows a control method of a detection device according to an embodiment of this application.

The method may be applied to the detection device shown in FIG. 2. As shown in FIG. 16, the control method includes at least steps S1201 to S 1203.

In step S1201, a transmitting component is controlled to transmit a laser beam, and the laser beam is processed by a collimating and shaping component as a collimated linear laser beam.

In step S1202, a scanning rotating mirror component is controlled to rotate to perform scanning.

For example, a control component controls a driving device to drive a rotating shaft to rotate, so that a rotating mirror is driven to rotate. An angle of a working reflection surface of the rotating mirror is changed to change an emergent direction of the linear laser beam, so that the detection device scans to-be-scanned target space.

In step S 1203, a receiving component receives a target echo, to convert the target echo into an electrical signal. The target echo includes a reflected signal of the linear laser beam.

In an example, as shown in FIG. 17, the control method of the detection device further includes steps S1204 and S 1205.

In step S1204, an energy distribution of the linear laser beam is adjusted based on the electrical signal corresponding to the target echo.

For example, a processing component adjusts the energy distribution of the linear laser beam by controlling a transmission parameter of each laser transmitter in a laser transmitter array. Alternatively, the processing component adjusts and replaces different microlens components of a plurality of microlens components, to achieve a linear laser beam in which energy is differently distributed. Alternatively, the processing component may adjust the energy distribution of the linear laser beam by adjusting the transmission parameter of each laser transmitter in the laser transmitter array and adjusting and replacing different microlens components of the plurality of microlens components.

The detection device in this embodiment of this application may dynamically change a light spot energy distribution based on a sensing result of a previous frame or another requirement. For example, scanning precision/frequency of a region of interest (region of interest, ROI) is improved, to implement fast positioning and high-precision scanning of the region of interest (a vehicle, a person, a building, or a random spot); and scanning precision and power of a non-ROI are reduced, to implement energy saving and environmental protection.

In step S1205, a parameter of an SPAD detector pixel array is adjusted based on the electrical signal corresponding to the target echo, to adjust resolution of the receiving component.

For example, the processing component controls and adjusts the parameter of the single-photon avalanche detector pixel array based on the electrical signal corresponding to the target echo, to adjust the resolution of the receiving component. The parameter of the avalanche detector pixel array includes a pixel interval and/or a quantity of single-photon avalanche detectors in a pixel. SPAD pixel density is adjusted based on a perception structure of a previous frame, to achieve a high pixel in an ROI, thereby improving resolution of the ROI.

In another example, before step S1201, the method further includes step S1200: Control synchronization between the scanning rotating mirror component and the transmitting component.

For example, in a rotation process of the scanning rotating mirror component, a position of the scanning rotating mirror component is obtained by using the synchronization component. When the scanning rotating mirror component rotates to a synchronization position, the transmitting component is controlled to transmit a laser beam, to implement synchronization between the transmitting component and the scanning rotating mirror component.

An embodiment of this application further provides a chip, including at least one processor and a communications interface. The processor is configured to perform the method in FIG. 16 and/or FIG. 17.

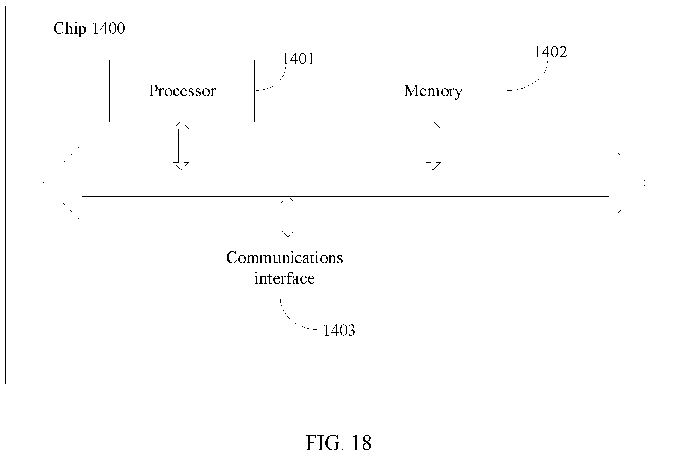

FIG. 18 is a schematic diagram of a structure of a chip according to an embodiment of this application.

As shown in FIG. 18, a chip 1400 includes at least one processor 1401, a memory 1402, and a communications interface 1403. The processor 1401, the memory 1402, and the communications interface 1403 are communicatively connected, or may implement communication by using another means such as wireless transmission. The communications interface 1403 is configured to receive a signal of a synchronization component and/or send a control signal to a sending component to adjust a transmission parameter and/or send a control signal to a receiving component to adjust a parameter of a receiving detector pixel array. The memory 1402 stores executable program code, and the processor 1401 may invoke the program code stored in the memory 1402 to perform the control method of the detection device in the foregoing method embodiment.

It should be understood that, the processor 1401 in this embodiment of this application may be a central processing unit CPU, or may be another general-purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor or any conventional processor.

The memory 1402 may include a read-only memory and a random access memory, and provide instructions and data to the processor 1401. The memory 1402 may further include a nonvolatile random access memory.

The memory 1402 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be understood that the chip 1400 in this embodiment of this application may implement the methods shown in FIG. 16 and FIG. 17 in embodiments of this application. For detailed descriptions of implementation of the method, refer to the foregoing description. For brevity, details are not described herein again.

This application further provides a computer-readable storage medium. The computer-readable storage medium stores a computer program. When the computer program is executed on a computer, the computer is enabled to implement either one of the foregoing methods.

This application further provides a computer program or a computer program product. The computer program or the computer program product includes instructions. When the instructions are executed, a computer is enabled to perform either one of the foregoing methods.

This application further provides a laser radar system including one or more foregoing detection devices, and target detection is performed by using the detection devices.

This application further provides a terminal including the foregoing detection device or laser radar system. The terminal includes but is not limited to an intelligent transportation device on which the detection device or the laser radar system is deployed, for example, a vehicle, an uncrewed aerial vehicle, or a robot; a surveying and mapping device on which the detection device or the laser radar system is deployed; and a traffic infrastructure on which the detection device or the laser radar system is deployed.

A motor vehicle is used as an example to describe an application of the detection device or the laser radar system on the motor vehicle. The laser radar system is installed on the motor vehicle, and the laser radar system may be communicatively connected to an intelligent driving system or an automatic driving system on the motor vehicle. Detection devices are installed at a plurality of locations on the motor vehicle (detection points preferably cover a panoramic view around the motor vehicle, and certainly, detection points may be deployed depending on an actual requirement). A detection device at each detection point completes spatial scanning, to obtain spatial point cloud data of each detection point. The automatic driving system of the motor vehicle combines spatial point cloud data of all detection points to form spatial point cloud information of an ambient environment of the vehicle, to perceive ambient environment information.

In the descriptions of this specification, the described specific features, structures, materials, or characteristics may be combined in a proper manner in any one or more of embodiments or examples.

It should be noted that the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A detection device, comprising:

    a transmitting component, configured to transmit a laser beam;
    a collimating and shaping component, configured to process the laser beam as a collimated linear laser beam or planar laser beam;
    a scanning rotating mirror component, comprising at least one reflection surface, configured to reflect the linear laser beam or the planar laser beam;
    a receiving component, configured to receive a target echo, wherein the target echo comprises a reflected signal of the linear laser beam or the planar laser beam
    ; and
    a synchronization component, at least configured to obtain a synchronization position of a working reflection surface in the at least one reflection surface, wherein the synchronization position represents a position at which the working reflection surface initially receives the linear laser beam or the planar laser beam, and the working reflection surface corresponds to an emergent direction of the linear laser beam or the planar laser beam.

**2.** The detection device according to claim 1, wherein the transmitting component comprises a laser transmitter array consisting of a plurality of laser transmitters.

**3.** The detection device according to claim 2, wherein the laser transmitter array comprises at least one column of laser transmitters, wherein a first column of the at least one column of laser transmitters comprises at least N groups of laser transmitters, and the N groups of laser transmitters are arranged in a staggered manner, or the N groups of laser transmitters are arranged in a collinear manner, or the N groups of laser transmitters are arranged in a non-collinear manner, wherein N is a positive integer greater than one.

**4.** The detection device according to claim 3, wherein there are a same quantity of laser transmitters in each of the N groups of laser transmitters, or quantities of laser transmitters in at least two groups are different.

**5.** The detection device according to any one of claims 2 to 4, wherein the plurality of laser transmitters comprise an edge-emitting laser transmitter and a vertical-cavity surface-emitting laser transmitter, and the edge-emitting laser transmitter and the vertical-cavity surface-emitting laser transmitter are adjacently arranged.

**6.** The detection device according to any one of claims 2 to 5, wherein the detection device further comprises a processing component, configured to control a transmission parameter of each laser transmitter in the laser transmitter array, wherein the transmission parameter comprises at least one of a transmitting switch parameter, a transmitting power parameter, a pulsed/continuous light transmission parameter, and a repetitive frequency parameter.

**7.** The detection device according to claim 6, wherein the collimating and shaping component comprises a plurality of microlens components, and different microlens components of the plurality of microlens components collimate and shape the laser beam into a linear laser beam in which energy is differently distributed; and
the processing component is configured to adjust the transmission parameter of each laser transmitter and/or the plurality of microlens components.

**8.** The detection device according to any one of claims 1 to 7, wherein the at least one reflection surface is disposed in parallel to an axial direction of a rotating shaft of the scanning rotating mirror component.

**9.** The detection device according to any one of claims 1 to 7, wherein a middle part of any reflection surface of the at least one reflection surface is disposed in an inclined manner toward a rotating shaft in an axial direction of the rotating shaft of the scanning rotating mirror component.

**10.** The detection device according to any one of claims 1 to 9, wherein the transmitting component and the receiving component are located on a same side of the scanning rotating mirror component.

**11.** The detection device according to any one of claims 1 to 9, wherein the transmitting component and the receiving component are separately located on two sides of the scanning rotating mirror component; and the at least one reflection surface comprises two reflection surfaces that are perpendicular to each other, the laser beam transmitted by the transmitting component is processed by the collimating and shaping component as the collimated linear laser beam or planar laser beam, the linear laser beam or planar laser beam is irradiated to a first working reflection surface, and the receiving component is configured to receive a target echo reflected by a second working reflection surface, wherein the first working reflection surface corresponds to an emergent direction of the linear laser beam or the planar laser beam, and the target echo comprises a reflected signal of the linear laser beam or the planar laser beam, the second working reflection surface corresponds to an incident direction of the reflected signal of the linear laser beam or the planar laser beam, and the first working reflection surface and the second working reflection surface are perpendicular to each other.

**12.** The detection device according to any one of claims 1 to 9, wherein the receiving component comprises at least a first receiving component and a second receiving component;

the first receiving component and the transmitting component are located on a same side of the scanning rotating mirror component, and the second receiving component and the transmitting component are separately located on two sides of the scanning rotating mirror component; and
the at least one reflection surface comprises two reflection surfaces that are perpendicular to each other, the laser beam transmitted by the transmitting component is processed by the collimating and shaping component as the collimated linear laser beam or planar laser beam, the linear laser beam or the planar laser beam is irradiated to a third working reflection surface, the first receiving component is configured to receive a target echo reflected by the third working reflection surface, and the second receiving component is configured to receive a target echo reflected by a fourth working reflection surface, wherein the third working reflection surface corresponds to an emergent direction of the linear laser beam or the planar laser beam, the target echo comprises a reflected signal of the linear laser beam or the planar laser beam, the fourth working reflection surface corresponds to an incident direction of the reflected signal of the linear laser beam or the planar laser beam, and the third working reflection surface and the fourth working reflection surface are perpendicular to each other.

13. The detection device according to any one of claims 1 to 9, wherein the transmitting component comprises at least a first transmitting component and a second transmitting component, the collimating and shaping component comprises at least a first collimating and shaping component and a second collimating and shaping component, and the receiving component comprises at least a third receiving component and a fourth receiving component;

the scanning rotating mirror component comprises a plurality of reflection surfaces, and the first transmitting component, the first collimating and shaping component, and the third receiving component, and the second transmitting component, the second collimating and shaping component, and the fourth receiving component are separately disposed on two sides of the scanning rotating mirror component;
the first transmitting component is configured to transmit a first laser beam, the first collimating and shaping component is configured to process the first laser beam as a collimated first linear laser beam or first planar laser beam, and align the first linear laser beam or the first planar laser beam onto a fifth working reflection surface, and the third receiving component is configured to receive a first target echo, wherein the fifth working reflection surface corresponds to an emergent direction of the first linear laser beam or the first planar laser beam, and the first target echo comprises a reflected signal of the first linear laser beam or the first planar laser beam; and
the second transmitting component is configured to transmit a second laser beam, the second collimating and shaping component is configured to process the second laser beam as a collimated second linear laser beam or second planar laser beam, and align the second linear laser beam or the second planar laser beam onto a sixth working reflection surface, and the fourth receiving component is configured to receive a second target echo, wherein the sixth working reflection surface corresponds to an emergent direction of the second linear laser beam or the second planar laser beam, and the second target echo comprises a reflected signal of the second linear laser beam or the second planar laser beam.

14. The detection device according to any one of claims 1 to 9, wherein the transmitting component comprises at least a third transmitting component and a fourth transmitting component, the collimating and shaping component comprises at least a third collimating and shaping component and a fourth collimating and shaping component, and the receiving component comprises at least a fifth receiving component and a sixth receiving component;

the at least one reflection surface comprises at least two reflection surfaces that are perpendicular to each other, and the third transmitting component, the third collimating and shaping component, and the fifth receiving component, and the fourth transmitting component, the fourth collimating and shaping component, and the sixth receiving component are separately disposed on two sides of the scanning rotating mirror component;
the third transmitting component is configured to transmit a third laser beam, the third collimating and shaping component is configured to process the third laser beam as a collimated third linear laser beam or third planar laser beam, and align the third linear laser beam or the third planar laser beam onto a seventh working reflection surface, and the sixth receiving component is configured to receive a third target echo reflected by a eighth working reflection surface, wherein the seventh working reflection surface corresponds to an emergent direction of the third linear laser beam or the third planar laser beam, the third target echo comprises a reflected signal of the third linear laser beam or the third planar laser beam, the eighth working reflection surface corresponds to an incident direction of the reflected signal of the third linear laser beam or the third planar laser beam, and the seventh working reflection surface and the eighth working reflection surface are perpendicular to each other; and
the fourth transmitting component is configured to transmit a fourth laser beam, the fourth collimating and shaping component is configured to process the fourth laser beam as a collimated fourth linear laser beam or fourth planar laser beam, and align the fourth linear laser beam or the fourth planar laser beam onto the eighth working reflection surface, and the fifth receiving component is configured to receive a fourth target echo reflected by the seventh working reflection surface, wherein the fourth target echo comprises a reflected signal of the fourth linear laser beam or the fourth planar laser beam.

15. The detection device according to any one of claims 1 to 14, wherein the detection device further comprises a window, the scanning rotating mirror component comprises the rotating shaft, the at least one reflection surface rotates around the rotating shaft, the rotating shaft is disposed between a first plane and a second plane or a curved surface, the first plane is determined based on an optical axial direction of the linear laser beam or the planar laser beam and a light spot extension direction of the linear laser beam or the planar laser beam, and the second plane or the curved surface is a plane or a curved surface on which the window is located.

16. The detection device according to any one of claims 1 to 15, wherein the receiving component comprises a single-photon avalanche detector pixel array, the single-photon avalanche detector pixel array comprises a plurality of pixels, and the pixel comprises one or more single-photon avalanche detectors.

17. The detection device according to claim 16, further comprising the processing component, configured to control a parameter of the single-photon avalanche detector pixel array based on an electrical signal corresponding to the target echo, to adjust resolution of the receiving component, wherein the parameter of the single-photon valanche detector pixel array comprises a pixel interval and/or a quantity of single-photon avalanche detectors in the pixel and/or single-photon avalanche detectors comprised in the pixel.

18. The detection device according to any one of claims 1 to 15, wherein the receiving component comprises a silicon photomultiplier array, the silicon photomultiplier array comprises a plurality of pixels, and the pixel comprises one or more silicon photomultipliers.

19. The detection device according to claim 18, further comprising the processing component configured to control a parameter of the silicon photomultiplier array based on an electrical signal corresponding to the target echo, to adjust resolution of the receiving component, wherein the parameter of the silicon photomultiplier array comprises a pixel interval and/or a quantity of silicon photomultipliers in the pixel and/or silicon photomultipliers comprised in the pixel.

20. The detection device according to any one of claims 1 to 19, wherein the linear laser beam comprises M linear laser sub-beams, and the M linear laser sub-beams are spliced to form the linear laser beam; or

the planar laser beam comprises M planar laser sub-beams, and the M planar laser sub-beams are spliced to form the planar laser beam, wherein
M is an integer greater than or equal to 2.

21. The detection device according to claim 20, wherein adjacent linear laser sub-beams of the M linear laser sub-beams are connected or partially overlap in an extension direction of the M linear laser sub-beams; or
adjacent planar laser sub-beams of the M planar laser sub-beams are connected or partially overlap.

22. The detection device according to claim 20 or 21, wherein light spots of the M linear laser sub-beams extend along a vertical field of view of the detection device, and the light spots of the M linear laser sub-beams are evenly distributed or not evenly distributed within the vertical field of view of the detection device.

23. The detection device according to claim 20 or 21, wherein a light spot of the linear laser beam extends along a horizontal field of view of the detection device or tilts relative to the horizontal field of view of the detection device.

24. The detection device according to any one of claims 20 to 23, wherein the linear laser beam is configured to form a linear light spot or a convex-shaped light spot;

the M planar laser sub-beams form light spots of a same shape, and the planar laser beam is used to form a rectangular light spot; or
there are light spots of at least different shapes in light spots formed by the M planar laser sub-beams, and the planar laser beam is used to form a special-shaped light spot.

25. The detection device according to any one of claims 1 to 24, further comprising a driving device, configured to drive the scanning rotating mirror component to rotate around the rotating shaft, wherein the scanning rotating mirror component comprises a plurality of reflection surfaces that are enclosed to form accommodating space, and the driving device is disposed in the accommodating space.

26. A control method of a detection device, comprising:

controlling a transmitting component to transmit a laser beam, wherein the laser beam is processed by a collimating and shaping component as a collimated linear laser beam;
controlling a scanning rotating mirror component to rotate to perform scanning; and

controlling a receiving component to receive a target echo, to convert the target echo into an electrical signal, wherein the target echo comprises a reflected signal of the linear laser beam.

27. The method according to claim 26, further comprising:
controlling a transmission parameter of each laser transmitter and/or the plurality of microlens components based on the electrical signal corresponding to the target echo, to adjust an energy distribution of the linear laser beam.

28. The method according to claim 26 or 27, further comprising:
adjusting a parameter of a single-photon avalanche detector pixel array based on the electrical signal corresponding to the target echo, to adjust resolution of the receiving component, wherein the parameter of the avalanche detector pixel array comprises a pixel interval and/or a quantity of single-photon avalanche detectors in a pixel.

29. The method according to any one of claims 26 to 28, wherein before the controlling a transmitting component to transmit a laser beam, the method further comprises:

controlling a synchronization component and the scanning rotating mirror component, to obtain a synchronization position of a working reflection surface; and
controlling, based on the synchronization position, synchronization between the scanning rotating mirror component and the transmitting component.

30. A chip, comprising at least one processor and a communications interface, wherein the processor is configured to perform the method according to any one of claims 26 to 29.

31. A computer-readable storage medium, wherein the computer-readable storage medium stores a computer program, and when the computer program is executed in a computer, the computer is enabled to perform the method according to any one of claims 26 to 29.

32. A laser radar system, comprising at least the detection device according to any one of claims 1 to 25.

33. A terminal, comprising at least the detection device according to any one of claims 1 to 25, or the laser radar system according to claim 32.

Transmitting module | Receiving module

Transmitted
light beam

360-degree
rotating pan-tilt

Received
light beam

Space object

FIG. 1

FIG. 2

FIG. 3

FIG. 4

FIG. 5

Dot-shaped laser beam Collimating and shaping component Linear laser beam

FIG. 6

Transmitting
component

Receiving
component

Linear light spot

FIG. 7a

Transmitting
component

Receiving
component

Linear sub-light spot

Linear sub-light spot

FIG. 7b

FIG. 7c

FIG. 7d

FIG. 7e

FIG. 7f

FIG. 7g

FIG. 7h

FIG. 8

FIG. 9

FIG. 10

FIG. 11

Transmitting
component

Receiving
component

Object

FIG. 12a

FIG. 12b

FIG. 12c

FIG. 12d

FIG. 12e

FIG. 12f

FIG. 12g

FIG. 12h

FIG. 12i

Object

90°

A1

Transceiver
component

A2

Transceiver
component

FIG. 12j

Object

Normal

θ1'

A1

θ1

90°

θ2

θ2'

A2

θ2

Transceiver
component

Transceiver
component

FIG. 12k

SPAD array

Multi_shot

One pixel

Laser pulse

SPAD density
height of
one SPAD cell

FIG. 13

FIG. 14

Dot-shaped laser beam        Collimating and shaping component        Linear laser beam in which energy is differently distributed

FIG. 15

Control a transmitting component to transmit a laser beam, where the laser beam is processed by a collimating and shaping component as a collimated linear laser beam    1201

Control a rotating mirror scanning component to rotate to perform scanning    1202

Control a receiving component to receive a target echo, to convert the target echo into an electrical signal    1203

FIG. 16

Adjust an energy distribution of a linear laser beam based on an electrical signal corresponding to a target echo    1204

Adjust a parameter of a single-photon avalanche detector pixel array based on the electrical signal corresponding to the target echo, to adjust resolution of a receiving component    1205

FIG. 17

FIG. 18

## INTERNATIONAL SEARCH REPORT

| International application No. |
| --- |
| **PCT/CN2022/082832** |

| A. | CLASSIFICATION OF SUBJECT MATTER |
| --- | --- |
| | G01S 7/481(2006.01)i; G01S 17/02(2020.01)i |

According to International Patent Classification (IPC) or to both national classification and IPC

| B. | FIELDS SEARCHED |
| --- | --- |

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS, CNTXT, WPABSC, ENTXTC: 雷达, 激光, 发射, 阵列, 准直, 旋转, 转动, 面, 反射面, 镜, 接收, 回波, 同步, radar, lidar, laser, array, reflect+, surface, mirror, rotat+, synchro+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 113567956 A (HUAWEI TECHNOLOGIES CO., LTD.) 29 October 2021 (2021-10-29) claims 1-33, and description, paragraphs 0006-0174, and figures 1-18 | 1-33 |
| X | CN 111580115 A (HESAI PHOTONICS TECHNOLOGY CO., LTD.) 25 August 2020 (2020-08-25) description, paragraphs 0071-0114, and figures 1-6 | 26-28, 30-31 |
| X | CN 208506242 U (TANWAY TECHNOLOGY CO., LTD.) 15 February 2019 (2019-02-15) description, paragraphs 0029-0068, and figures 1-2 | 26-28, 30-31 |
| Y | CN 111580115 A (HESAI PHOTONICS TECHNOLOGY CO., LTD.) 25 August 2020 (2020-08-25) description, paragraphs 0071-0114, and figures 1-6 | 1-11, 15-25, 29, 32-33 |
| Y | CN 208506242 U (TANWAY TECHNOLOGY CO., LTD.) 15 February 2019 (2019-02-15) description, paragraphs 0029-0068, and figures 1-2 | 1-11, 15-25, 29, 32-33 |
| Y | CN 111656215 A (DENSO CORP.) 11 September 2020 (2020-09-11) description, paragraphs 0034-0100 | 1-11, 15-25, 29, 32-33 |
| Y | CN 110441200 A (CHANGSHA TSINGBO PHOTONICS CO., LTD.) 12 November 2019 (2019-11-12) description, paragraphs [0028]-[0041] | 1, 20-24 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 June 2022** | **16 June 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 306 995 A1**

## INTERNATIONAL SEARCH REPORT

<table>
<tr><td colspan="2" rowspan="2"></td><td>International application No.</td></tr>
<tr><td>**PCT/CN2022/082832**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| Y | CN 110231606 A (NIO NEXTEV LTD.) 13 September 2019 (2019-09-13)<br>description, paragraphs 0038-0047 | 11 |
| A | CN 110389354 A (LEISHEN INTELLIGENT SYSTEM CO., LTD.) 29 October 2019<br>(2019-10-29)<br>entire document | 1-33 |
| A | US 2019154816 A1 (LUMINAR TECHNOLOGIES INC.) 23 May 2019 (2019-05-23)<br>entire document | 1-33 |

Form PCT/ISA/210 (second sheet) (January 2015)

**INTERNATIONAL SEARCH REPORT**
Information on patent family members

International application No.

**PCT/CN2022/082832**

| Patent document cited in search report | | | Publication date (day/month/year) | Patent family member(s) | | | Publication date (day/month/year) |
|---|---|---|---|---|---|---|---|
| CN | 113567956 | A | 29 October 2021 | None | | | |
| CN | 111580115 | A | 25 August 2020 | CN | 212623082 | U | 26 February 2021 |
| CN | 208506242 | U | 15 February 2019 | None | | | |
| CN | 111656215 | A | 11 September 2020 | US | 2020355805 | A1 | 12 November 2020 |
| | | | | JP | 2019128232 | A | 01 August 2019 |
| | | | | WO | 2019146647 | A1 | 01 August 2019 |
| | | | | DE | 112019000517 | T5 | 08 October 2020 |
| CN | 110441200 | A | 12 November 2019 | None | | | |
| CN | 110231606 | A | 13 September 2019 | None | | | |
| CN | 110389354 | A | 29 October 2019 | WO | 2021012963 | A1 | 28 January 2021 |
| US | 2019154816 | A1 | 23 May 2019 | US | 10451716 | B2 | 22 October 2019 |

Form PCT/ISA/210 (patent family annex) (January 2015)

**EP 4 306 995 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110382166
- CN 202110930106